# EUROPÄISCHE PATENTANMELDUNG

(11) **EP 4 389 647 A1**
(43) Veröffentlichungstag der Anmeldung: **26.06.2024**
(21) Anmeldenummer: 22215854.5
(22) Anmeldetag: 22.12.2022
(51) Int. Cl.: B65G 9/00, B61B 3/00, B61B 10/00, B65G 43/02

(54) **HÄNGEFÖRDERERSYSTEM UND VERFAHREN ZUR ÜBERWACHUNG EINES HÄNGEFÖRDERERS**

(71) Anmelder: BEUMER Group GmbH & Co. KG, 59269 Beckum (DE)
(72) Erfinder: HEESING, Christian, 33739 Bielefeld (DE); VON SCHROEDER, Jonathan, 59269 Beckum (DE); NEUMANN, Nils, 33378 Rheda-Wiedenbrück (DE)
(74) Vertreter: Angerhausen, Christoph

(57) **Zusammenfassung**

Die Erfindung betrifft ein Hängeförderersystem (100), aufweisend ein Überwachungssystem und einen Hängeförderer (101) mit mindestens einem Carrier (1), der entlang einer Schiene des Hängeförderers (101) verfahrbar ist, wobei das Überwachungssystem eine Kontrollstation (102) und mindestens eine mit der Kontrollstation (102) zum Datenaustausch verbundene Überwachungseinheit (2) aufweist, die dazu eingerichtet ist, einen charakteristischen Wert (10) des Hängeförderers (101) und/oder des Carriers (1) zu erfassen und an die Kontrollstation (102) zu übermitteln, wobei bevorzugt mindestens eine der Überwachungseinheiten (2) an oder bei dem Hängeförderer (101) angeordnet ist, besonders bevorzugt an oder bei einer Funktionseinheit, Schiene, Weiche, Vereinzelungsvorrichtung oder einer Station des Hängeförderers (101). Die Erfindung betrifft zudem ein Verfahren zum Überwachen eines Hängeförderers (101).

## Beschreibung

Die Erfindung betrifft ein Hängeförderersystem und ein Verfahren zur Überwachung eines Hängeförderers.

Hängeförderer werden beispielsweise zum Transport von Transportgut wie z.B. Postsendungen, Pakete, Päckchen oder dergleichen verwendet. Hängeförderer können Taschenförderer und/oder Taschensorter sein oder umfassen, bei denen an Carrier hängende Taschen entlang Schienen gefördert werden.

Derartige Taschenförderer und/oder Taschensorter sind z.B. in Verteilzentren der Kurier-Express-Paket(KEP)-Branche eingesetzt. Verteilzentren haben die Aufgabe, Pakete, Päckchen und sonstige Warenstücke, im allgemeinen Sendungen, innerhalb bestimmter Abmessungen und Gewichte entgegenzunehmen und auf Versandrichtungen zu verteilen. Im Gegensatz zu Warenhaus-Versandzentren sind KEP-Verteilzentren nicht darauf ausgerichtet, Aufträge abzuwickeln, sondern in einem definierten Zeitfenster, während der sogenannten Schicht, das eingelieferte Volumen von Paketen und sonstigen Sendungen möglichst vollständig zu verteilen. Die Sendungen treffen dabei zeitlich unkorreliert und in unterschiedlichsten Transportmitteln im KEP-Verteilzentrum ein. Die Sendungen sind dabei nicht zwangsläufig nach Größe getrennt. Die Entladung der Sendungen kann automatisch, halbautomatisch oder manuell erfolgen.

Generell ist erstrebenswert, Ausfälle des Hängeförderers möglichst zu vermeiden. Dazu ist eine Erfassung des Zustands des Hängeförderers allgemein, aber auch dessen Funktionseinheiten wie z.B. Ladestationen, Entladestationen, Ausschleusstationen, Sortierer, Puffer oder Speicher, Schienen, Weichen, aber auch der Carrier oder Taschen vorteilhaft, um einen möglichen Ausfall oder Defekt bereits im Voraus zu erkennen oder zumindest vorhersagen zu können. Aufgrund der Komplexität eines Hängeförderersystems mit einer großen Zahl an Komponenten und damit potentiellen Ausfällen ist eine solche Erfassung allerdings schwierig. Ein Verfahren zur Überwachung eines Fördersystems ist aus der EP 3 540 547 A1 bekannt.

Die vorliegende Erfindung löst dieses Problem durch ein Hängeförderersystem nach Anspruch 1 und ein Verfahren zum Überwachen eines Hängeförderers nach Anspruch 14. Vorteilhafte Ausführungsformen sind Gegenstand der jeweiligen Unteransprüche.

Mit der Überwachungseinheit können charakteristische Werte des Hängeförderersystems, z.B. des Hängeförderers, einfach und unkompliziert überwacht werden. In einigen Ausführungsformen kann dadurch, dass der Carrier oder Überwachungscarrier gezielt an eine zu überwachende Stelle oder in einem Überwachungsbereich verfahren werden kann bzw. verfahrbar ist, vergleichsweise einfach und mit einer vergleichsweise geringen Anzahl Überwachungseinheiten das Hängeförderersystem überwacht werden. Die von der Überwachungseinheit erfassten Werte können an eine Kontrollstation übermittelt sein oder werden. Anhand der übermittelten charakteristischen Werte kann ein Zustand des Hängefördersystems und/oder dessen Funktionseinheiten bestimmt werden, und eine Vorhersage bezüglich eines Ausfalls oder Defekts bzw. eines Wartungszeitpunkts getroffen werden.

Zudem kann das Hängeförderersystem und ggf. zusätzliche Sensoren an ein Netzwerk angeschlossen und die gesammelten Daten analysiert werden. Damit kann die Leistung des Hängeförderersystems und/oder deren Funktionseinheiten erhöht, und z.B. die Kosten bei der Inbetriebnahme und im Betrieb erheblich gesenkt werden. Die erfassten und/oder durch Analyse gewonnenen Informationen können die Installation, den Betrieb und die Wartung der Hängeförderer, aber auch die Entwicklung neuer Produktgenerationen unterstützen.

Die Idee vernetzter Maschinen und Prozesse im Kontext von Industrie 4.0 bietet hervorragende Perspektiven für Condition-Monitoring-Lösungen. Die Daten aus verschiedenen Systemen, Geräten, Sensoren und Aktoren können mit Hilfe moderner Kommunikationstechnologien in Echtzeit erfasst und in großen Mengen archiviert werden. Die Umwandlung der unstrukturierten Daten in Wissen durch die Identifizierung von Mustern oder Korrelationen hilft bei der Erkennung von Anomalien und verbessert die Überwachung des Zustands der Maschinenkomponenten. Dies führt zu einem insgesamt stabileren und zuverlässigeren Betrieb. Moderne Hängeförderersysteme bzw. Sortiersysteme verwenden eine Vielzahl von Steuerungen, die über verschiedene Schnittstellen und Protokolle kommunizieren. Neben den Steuerungsdaten können über denselben Kommunikationsweg auch Daten von zusätzlichen Sensoren übertragen werden. Darüber hinaus bieten viele vorhandene Geräte Informationen, die extrahiert werden können. Diese Daten geben Aufschluss über den allgemeinen Gesundheitszustand, ermöglichen die frühzeitige Erkennung von Fehlfunktionen, die Analyse der Auslastung von Maschinenkomponenten und viele weitere zukünftige Anwendungen. Diese Erkenntnisse sind für viele Unternehmensabteilungen wertvoll, z. B. für das Engineering, den technischen Support, die Wartung, den Vertrieb oder das Marketing.

Die Erfindung ermöglicht, den Bedarf an Service, Wartung und/oder Ersatzteilen vorherzusagen, bevor das System ausfällt. Diese Teile können das Gleis, die Mechanik des Wagensystems, die Antriebsmechanik, Motoren, elektrische Komponenten und die Kommunikationshardware umfassen. Es ist auch möglich, dass Schwachstellen gefunden werden, die zu Ausfällen führen könnten, die durch robustere Konstruktionsregeln verhindert werden können. Die gewonnenen Erkenntnisse können bei nachfolgenden Weiterentwicklungen berücksichtigt werden. Zudem kann eine Ausfallswarnung ausgegeben werden, bevor eine Komponente z.B. des Hängeförderers ausfällt. Mit der Erfindung kann auch die Inbetriebnahme eines Hängeförderers unterstützt werden. Beispielsweise ermöglicht die Erfindung einen Test der Betriebsparameter und Betriebszustände durch einen Abgleich von Soll-Werten mit Ist-Werten. Damit können vor der Inbetriebnahme noch Korrekturen vorgenommen werden, oder fehlerhafte oder fehleranfällige Teile ausgetauscht sein oder werden. Mit der Erfindung kann z.B. auch erkannt sein oder werden, wenn Schienen des Hängeförderers nicht richtig zusammengeschweißt worden sind.

Die Erfindung ermöglich zudem, sehr kostenintensive Vor-Ort-Einsätze zu reduzieren. Zudem wird eine Fernwartung ermöglicht. Es können klare Grenzen (Parameter) für den Betrieb des Hängeförderersystems bzw. Sortierers definiert werden, die berücksichtigt werden können, um Systemausfälle zu erkennen, die durch eine falsche Konfiguration der Betriebsparameter verursacht werden.

Ein erster Aspekt der Erfindung betrifft ein Hängeförderersystem, aufweisend ein Überwachungssystem und einen Hängeförderer mit mindestens einem Carrier, der entlang einer Schiene des Hängeförderers verfahrbar ist, wobei das Überwachungssystem eine Kontrollstation und mindestens eine mit der Kontrollstation zum Datenaustausch verbundene Überwachungseinheit aufweist, die dazu eingerichtet ist, einen charakteristischen Wert des Hängeförderers und/oder des Carriers zu erfassen und an die Kontrollstation zu übermitteln.

Mindestens eine der Überwachungseinheiten kann an oder bei dem Hängeförderer angeordnet sein, beispielsweise an oder bei einer Funktionseinheit, Schiene, Weiche, Vereinzelungsvorrichtung oder einer Station des Hängeförderers.

Das Hängeförderersystem kann einen Überwachungscarrier aufweisen, der entlang einer Schiene des Hängeförderers verfahrbar sein kann und der mindestens eine Überwachungseinheit aufweisen kann.

Das Hängeförderersystem kann eine Überwachungsstation aufweisen, die an, in oder bei einem Schienenabschnitt des Hängeförderers angeordnet sein kann und die mindestens eine oder die Überwachungseinheit aufweisen kann, wobei die Überwachungseinheit dazu eingerichtet sein kann, einen für den Carrier und/oder den Schienenabschnitt charakteristischen Wert zu erfassen, wenn ein Carrier des Hängeförderers in dem Schienenabschnitt verfahren ist oder wird

Die Überwachungseinheit kann beispielsweise eines oder mehrere aus optischer Kamera, Wärmebildkamera, fotoelektrischer Sensor, Mikrophon und/oder Temperatursensor aufweisen. Der charakteristische Wert kann beispielsweise mindestens eines aus einer Temperatur, Vibration, Schwingung, Beschleunigung, Geräusch, Bild oder Video, Verformung des Carriers und/oder des Hängeförderers umfassen.

Die Kontrollstation kann dazu eingerichtet sein, eine Überwachungsroute entlang des Hängeförderers zu bestimmen. Der Carrier kann dazu eingerichtet sein, die Überwachungsroute abzufahren, wobei die Überwachungsroute zumindest abschnittsweise oder punktweise einen Überwachungsbereich und/oder Überwachungspunkt umfassen kann. Die Überwachungseinheit kann dazu eingerichtet sein, den charakteristischen Wert an, bei oder in dem Überwachungsbereich und/oder Überwachungspunkt zu erfassen. Die Kontrollstation kann dazu eingerichtet sein, den Carrier und/oder den Hängeförderer derart zu steuern, dass der Carrier entlang des Überwachungsbereichs verfahren ist oder wird.

Die Kontrollstation kann dazu eingerichtet sein, die Überwachungsroute, den Überwachungsbereich und/oder den Überwachungspunkt wiederholt und/oder periodisch zu bestimmen und/oder zu ändern.

Die Überwachungseinheit kann dazu eingerichtet sein, den charakteristischen Wert wiederholt und/oder periodisch zu erfassen.

Die Kontrollstation kann dazu eingerichtet sein, basierend auf einem oder mehreren erfassten charakteristischen Werte eine Analyse von Vibrationen oder Schwingungen, bevorzugt des Hängeförderers oder einer Funktionseinheit des Hängeförderers, durchzuführen. Die Kontrollstation kann dazu eingerichtet sein, die Analyse unter Berücksichtigung von einer Überwachungseinheit, z.B. von einer Überwachungseinheit des Carriers, gemessenen Beschleunigungen durchzuführen.

Die Kontrollstation kann dazu eingerichtet sein, basierend auf dem erfassten charakteristischen Wert einen Status des Hängeförderers und/oder einer Funktionseinheit des Hängeförderers zu bestimmen, und/oder eine Vorhersage eines Ausfalls, Anomalie, und/oder Wartung des Hängeförderers oder eines Teils des Hängeförderers durchzuführen. Mit Status kann ein Zustand und/oder Zustandsverlauf gemeint sein.

Das Überwachungssystem und/oder die Kontrollstation kann einen Server aufweisen, der dazu eingerichtet sein kann, von der Überwachungseinheit erfasste charakteristische Werte zu empfangen und/oder zu verarbeiten. Die Kontrollstation kann über narrowband-IOT, LTE, GSM, WLAN und/oder Bluetooth mit der Überwachungseinheit verbunden sein. Der Server kann ein Cloud-Server sein oder aufweisen.

Die Kontrollstation und/oder der Server kann mit einem externen Gerät zum Datenaustausch verbunden sein, so dass das externe Gerät auf der Kontrollstation und/oder dem Server hinterlegte Daten, bevorzugt charakteristische Werte, zugreifen kann. Die Kontrollstation kann dazu eingerichtet sein, Steuerbefehle von dem externen Gerät zu empfangen, so dass eine Fernwartung des Hängefördersystems durch das externe Gerät durchführbar sein kann.

Das Überwachungssystem kann ein Gateway aufweisen, das mit der Kontrollstation, bevorzugt dem Server, und der Überwachungseinheit verbunden ist. Das Gateway kann ein IoT-Gateway sein oder aufweisen.

Das Überwachungssystem kann eine Benutzerschnittstelle, bevorzugt ein Human-Machine-Interface, besonders bevorzugt ein Display, aufweisen, das mit dem Server und/oder dem Gateway verbunden sein kann und das dazu eingerichtet sein kann, charakteristische Werte und/oder von der Kontrollstation durchgeführte Statusbestimmungen, Analysen und/oder Prognosen auszugeben, bevorzugt anzuzeigen. Die Benutzerschnittstelle und/oder das Human-Machine-Interface kann mit dem externen Gerät zum Datenaustausch verbunden sein und dazu eingerichtet sein, von dem externen Gerät empfangene Daten und/oder Steuerbefehle zu verarbeiten und/oder auszugeben, bevorzugt anzuzeigen.

Die Benutzerschnittstelle kann das Human-Machine-Interface aufweisen. Die Benutzerschnittstelle und/oder das Human-Machine-Interface kann ein Display aufweisen. Die Benutzerschnittstelle und/oder das Human-Machine-Interface kann z.B. einen Bildschirm mit Eingabemöglichkeit, z.B. per Touch und/oder Tastatur, aufweisen.

In einigen Ausführungsformen kann mit "Benutzerschnittstelle" und/oder "Human-Machine-Interface" jedwede Vorrichtung, Anordnung, System, und/oder Software gemeint sein, mittels der ein Benutzer mit dem System und/oder der Kontrollstation kommunizieren kann, beispielsweise Informationen erhalten und/oder Steuerbefehle eingeben oder übermitteln kann. In einigen Ausführungsforen kann ein Kontrollraum vorgesehen sein, in dem eine Benutzerschnittstelle vorgesehen und/oder angeordnet sein kann, beispielsweise ein Bildschirm und Eingabevorrichtung.

In einigen Ausführungsformen kann alternativ oder zusätzlich mit "Human-Machine-Interface" eine Steuerung an einer Maschine, z.B. eine Steuerkonsole oder dergleichen, gemeint sein.

Der Hängeförderer kann eine Ausschleusstation aufweisen, die dazu eingerichtet sein kann, einen auszuschleusenden Carrier auszuschleusen. Die Kontrollstation kann dazu eingerichtet sein, basierend auf erfassten charakteristischen Werten zu bestimmen, ob ein Carrier ein auszuschleusender Carrier ist.

Ein weiterer Aspekt der Erfindung betrifft ein Verfahren zum Überwachen eines Hängeförderers, mit den folgenden Schritten:
a) Erfassen eines für einen Hängeförderer und/oder einen Carrier des Hängeförderers charakteristischen Werts mit einer Überwachungseinheit und übermitteln des erfassten charakteristischen Werts an eine Kontrollstation, wobei der charakteristische Wert von einer an einem Carrier angeordneten Überwachungseinheit erfasst wird und/oder wobei der charakteristische Wert oder ein weiterer charakteristischer Wert von einer an, bei oder in dem Hängeförderer oder an, bei oder in einer Funktionseinheit des Hängeförderers angeordneten Überwachungseinheit erfasst wird;
b) Auswerten des übermittelten charakteristischen Werts durch die Kontrollstation.

Mit Status kann ein Betriebszustand, Zustand und/oder Zustandsverlauf gemeint sein. Der Datenaustausch kann über narrowband-IOT, LTE, WLAN, GSM und/oder Bluetooth erfolgen. Es kann vorgesehen sein, dass mindestens der Datenaustausch zwischen Kontrollstation und mindestens einer Überwachungseinheit, über narrowband-IOT, LTE, WLAN, GSM und/oder Bluetooth erfolgen kann.

Vor dem Erfassen des charakteristischen Werts kann das Verfahren die Schritte umfassen:
- Bestimmen einer Überwachungsroute mit einem Überwachungsbereich und/oder einem Überwachungspunkt
- Verfahren des Carriers an einen Punkt an oder in dem Überwachungsbereich und/oder Überwachungspunkt;
und wobei bei dem Erfassen des charakteristischen Werts der charakteristische Wert an, in oder bei dem Überwachungsbereich und/oder Überwachungspunkt erfasst werden kann.

Einer, mehrere oder alle Schritte des Verfahrens können wiederholt werden, bevorzugt periodisch wiederholt werden. Schritt a) des Verfahrens kann wiederholt werden, bevorzugt periodisch wiederholt werden.

Bei mindestens einer Wiederholung eines, mehrerer oder aller Schritte des Verfahrens kann die Überwachungsroute, der Überwachungsbereich und/oder der Überwachungspunkt geändert werden.

Bei mindestens einer Wiederholung eines, mehrerer oder aller Schritte des Verfahrens kann die Überwachungsroute, der Überwachungsbereich und/oder der Überwachungspunkt geändert werden.

Bei dem Auswerten des oder der übermittelten charakteristischen Werte kann ein Status des Hängeförderers und/oder des Carriers ermittelt werden. Mit Status kann ein und/oder Zustandsverlauf gemeint sein. Alternativ oder zusätzlich kann bei dem Auswerten des oder der übermittelten charakteristischen Werte eine Vorhersage eines Ausfalls, einer Anomalie und/oder einer Wartung durchgeführt werden. Alternativ oder zusätzlich kann bei dem Auswerten überprüft werden, ob Transportgut aus dem Hängeförderer herausgefallen ist, wobei bevorzugt die charakteristischen Werte Bilder, Videos oder Tiefendaten umfassen können.

Es kann vorgesehen sein, dass mehrmals eine Schwingung erfasst werden kann, wobei eine erste Schwingung an einem ersten Überwachungspunkt und eine zweite Schwingung an einen zweiten, von dem ersten Überwachungspunkt verschiedenen Überwachungspunkt erfasst sein oder werden kann.

Alternativ oder zusätzlich kann der Betriebszustand einer Funktionseinheit des Hängeförderers bei oder vor dem Erfassen der Schwingung variiert sein oder werden.

Alternativ oder zusätzlich kann bei dem Verfahren des der Carriers entlang der Überwachungsroute und/oder im Überwachungsbereich und/oder beim Erfassen der Schwingung zumindest abschnittsweise und/oder zeitweise eine Geschwindigkeit und/oder Beschleunigung des Carriers variiert sein oder werden.

Alternativ oder zusätzlich kann bei dem Verfahren des Carriers und/oder beim Erfassen der Schwingung der Carrier mehrmals und/oder wiederholt entlang der Überwachungsroute und/oder im Überwachungsbereich verfahren sein oder werden.

Alternativ oder zusätzlich können zum Erfassen der Schwingung mindestens zwei Carrier mit unterschiedlicher Beladung entlang der Überwachungsroute und/oder im Überwachungsbereich verfahren sein oder werden.

Bei dem Auswerten der übermittelten charakteristischen Werte kann bestimmt werden, ob ein Carrier ein auszuschleusender Carrier ist. Wenn ein Carrier ein auszuschleusender Carrier ist, kann der auszuschleusende Carrier mit einer Ausschleusstation des Hängeförderers ausgeschleust werden.

Ein Steuerbefehl kann von einem oder dem mit der Kontrollstation zum Datenaustausch verbundenen externen Gerät, und/oder einem oder dem mit der Kontrollstation zum Datenaustausch verbundenen Human-Machine-Interface, an die Kontrollstation übermittelt werden. Die Kontrollstation kann basierend auf dem Steuerbefehl den Carrier und/oder den Hängeförderer ansteuern.

Die Erfindung wird anhand der nachfolgenden Figuren weiter erläutert. Es zeigen:
- Fig. 1: ein Ausführungsbeispiel eines erfindungsgemäßen Überwachungscarriers in einer perspektivischen Ansicht und in einer Seitenansicht;
- Fig. 2: eine anderes Ausführungsbeispiel eines erfindungsgemäßen Überwachungscarriers in einer Seitenansicht;
- Fig. 3: noch ein anderes Ausführungsbeispiel eines erfindungsgemäßen Überwachungscarriers in einer Seitenansicht;
- Fig. 4: eine Carrierkontrolleinheit eines erfindungsgemäßen Überwachungscarriers in einer schematischen Darstellung;
- Fig. 5: ein Ausführungsbeispiel eines Hängeförderersystems;
- Fig. 6: ein weiteres Ausführungsbeispiel eines Hängeförderersystems;
- Fig. 7: noch ein weiteres Ausführungsbeispiel eines Hängeförderersystems;
- Fig. 8: noch ein anderes Ausführungsbeispiel eines Hängeförderersystems;
- Fig. 9: ein weiteres Ausführungsbeispiel eines Hängeförderersystems;
- Fig. 10: eine beispielhafte Abbildung von Schwingung und Vibrationen eines Hängeförderersystems;
- Fig.11: ein Ausführungsbeispiel einer Carrierprüfstation;
- Fig. 12: ein weiteres Ausführungsbeispiel einer Carrierprüfstation; und
- Fig. 13:: noch ein weiteres Ausführungsbeispiel einer Carrierprüfstation.

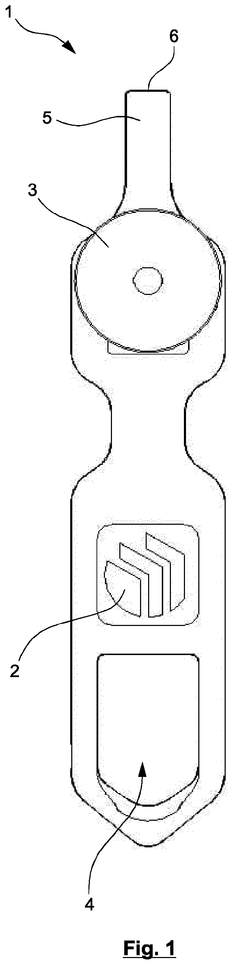

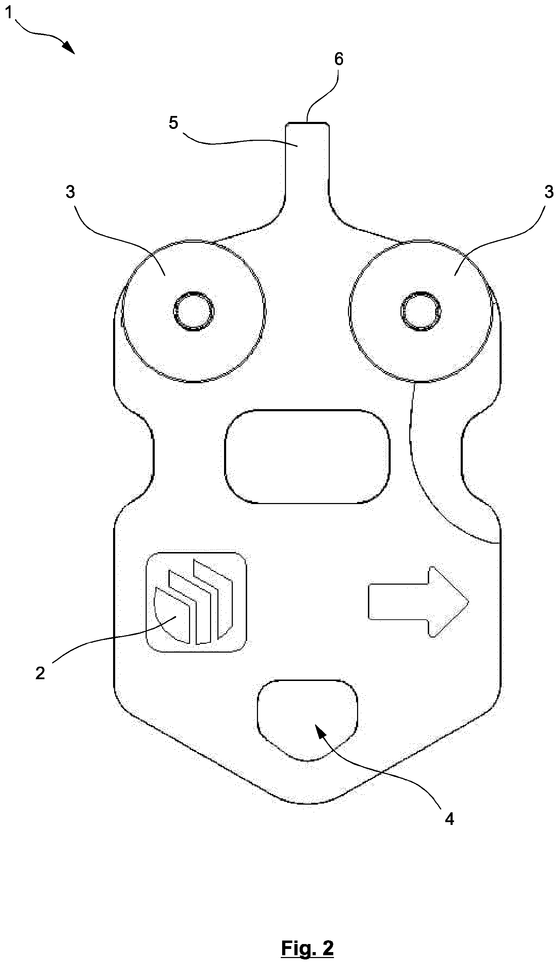

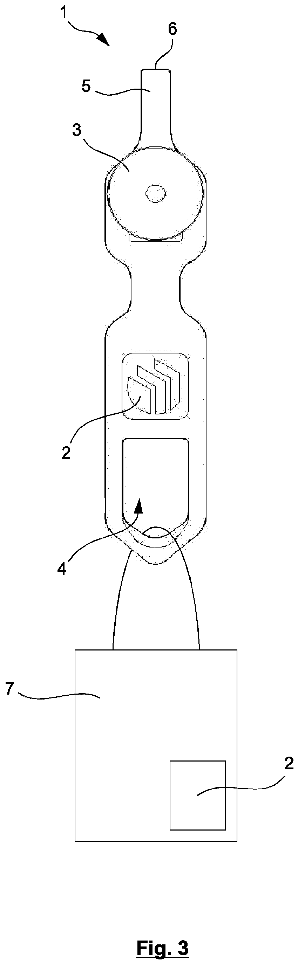

Figuren 1 bis 3 zeigen beispielhafte Ausführungsbeispiele erfindungsgemäßer Überwachungscarrier 1. Der Überwachungscarrier 1 weist eine Überwachungseinheit 2 auf. In einigen Ausführungsformen kann der Überwachungscarrier 1 auch mehr als eine Überwachungseinheit 2 aufweisen. Die Überwachungseinheit 2 kann an, in oder bei einer Oberfläche oder einem Abschnitt des Überwachungscarriers 1 angeordnet sein. Die Überwachungseinheit 2 kann in dem Überwachungscarrier 1 angeordnet sein. Der Überwachungscarrier 1 kann eine, zwei, drei, vier oder mehr Laufrollen 3 aufweisen. Es kann vorgesehen sein, dass der Überwachungscarrier 1 eine oder mehrere Symmetrieachsen aufweist, beispielsweise entlang einer Erstreckungsrichtung des Überwachungscarriers 1 oder senkrecht dazu, zu der mindestens zwei der Laufrollen 3 symmetrisch angeordnet sein können.

Ein Hängeförderersystem 100 und/oder ein Hängeförderer 101 kann einen oder mehrere Carrier 1 und/oder einen oder mehrere Überwachungscarrier 1 aufweisen. Ein Carrier 1 kann eines, mehrere oder alle der in Figuren 1 bis 4 gezeigten und beschriebenen Merkmale und/oder Vorteile aufweisen. In einigen Ausführungsformen können sich Carrier 1 von Überwachungscarriern 1 dahingehend unterscheiden, dass Carrier keine Überwachungseinheit 2 aufweisen. Der Carrier 1 kann ein allgemeiner oder generischer Carrier 1 für einen Hängeförderer 101 sein oder aufweisen. Es kann vorgesehen sein, dass Carrier 1 keine Überwachungseinheit 2 haben muss oder hat.

Der Überwachungscarrier 1 kann ein Koppelstück 5 aufweisen. Das Koppelstück 5 kann dazu eingerichtet sein, den Überwachungscarrier 1 mit einem Mitnehmer eines Hängeförderers zu verbinden. Es kann vorgesehen sein, dass eine Bewegung des Mitnehmers durch das Koppelstück 5 auf den Überwachungscarrier 1 übertragen wird, so dass Überwachungscarrier 1 entlang des Hängeförderers verfahren sein oder werden kann. Der Mitnehmer kann beispielsweise an einem Trum angeordnet und/oder befestigt sein.

Der Überwachungscarrier 1 kann eine Magnetkupplung 6 aufweisen. Die Magnetkupplung 6 kann an, bei oder in dem Koppelstück 5 angeordnet sein. Der Mitnehmer des Hängeförderers kann einen entsprechenden Magneten aufweisen, so dass Mitnehmer und Magnetkupplung 6 magnetisch gekoppelt sein können. Die Magnetkupplung 6 und/oder der Magnet des Mitnehmers kann z.B. ein Permanentmagnet, ein Elektromagnet oder ein Ferromagnet sein oder aufweisen. Magnetkupplung 6 und Magnet des Mitnehmers können dazu eingerichtet sein, sich anzuziehen.

Der Überwachungscarrier 1 kann eine Aufnahme 4 aufweisen. Die Aufnahme 4 kann an einem Ende des Überwachungscarriers 1, z.B. einem distalen Ende, angeordnet sein. Die Aufnahme 4 kann an einem dem Koppelstück 5 entgegengesetzten Ende des Überwachungscarriers 1 angeordnet sein. Der Überwachungscarrier 1 kann eine Tasche 7 aufweisen. Aufnahme 4 kann dazu eingerichtet sein, die Tasche 7 zu halten. In einigen Ausführungsformen kann die Überwachungseinheit 2 und/oder eine weitere Überwachungseinheit 2 an, in oder bei der Tasche 7 angeordnet sein. Ist eine oder die Überwachungseinheit 2 an, in oder bei der Tasche 7 angeordnet, so kann die Überwachungseinheit 2 einfach und unkompliziert durch Lösen der Tasche 7 von dem Überwachungscarrier 1 gelöst und ersetzt, gewartet und/oder getauscht sein oder werden.

Alternativ oder zusätzlich kann der Überwachungscarrier 1 eine Sensoraufnahme aufweisen, an oder in der mindestens eine oder die Überwachungseinheit 2 angeordnet sein kann.

Der Überwachungscarrier 1 kann einen Energiespeicher 16, z.B. eine Batterie oder einen Akkumulator, aufweisen. Der Energiespeicher 16 kann die Überwachungseinheit 2 und/oder die Kontrolleinheit 8 mit Energie versorgen. In einigen Ausführungsformen kann eine Ladeeinheit 17 vorgesehen sein, um den Energiespeicher 16 zu laden. Es kann vorgesehen sein, dass der Energiespeicher 16 induktiv aufladbar ist und/oder induktiv geladen ist oder wird, beispielsweise durch oder mit Hilfe der Ladeeinheit 17. Alternativ oder zusätzlich kann der Energiespeicher 16 austauschbar sein.

Der Überwachungscarrier 1 kann ein (nicht in den Figuren gezeigtes) Wartungshilfsmittel aufweisen. Das Wartungshilfsmittel kann eine Bürste und/oder eine Flüssigkeitsauftragungsvorrichtung sein oder aufweisen. Das Wartungshilfsmittel kann dazu eingerichtet sein, einen Schienenabschnitt des Hängeförderers zu warten und/oder zu reinigen. In einigen Ausführungsformen kann die Flüssigkeitsauftragsvorrichtung ein Schmiermittel, und/oder z.B. Öl oder dergleichen, auf den Schienenabschnitt auftragen. Alternativ oder zusätzlich kann das Wartungshilfsmittel eine Ultraschallvorrichtung aufweisen, so dass der Schienenabschnitt durch Ultraschall gewartet und/oder gereinigt sein oder werden kann.

Die Überwachungseinheit 2 ist dazu eingerichtet, einen charakteristischen Wert 10 des Überwachungscarriers 1, eines Carriers und/oder eines Hängeförderersystems 100 zu erfassen. Der charakteristische Wert 10 des Hängeförderersystems 100 kann ein charakteristischer Wert 10 eines Elements oder einer Funktionseinheit, z.B. einer Station oder eines Teils eines Hängeförderers 101 sein oder aufweisen. Eine Funktionseinheit des Hängeförderersystems 100 und/oder des Hängeförderers 101 kann eine Überwachungsstation 103, eine Ladestation 104, eine Entladestation 105, ein Taschensorters, z.B. ein Matrixsorters 106, ein Taschenpuffers 107 und/oder eine Weiche 108 sein oder aufweisen. In einigen Ausführungsformen kann alternativ oder zusätzlich ein oder das Überwachungssystem eine oder die Überwachungsstation aufweisen.

In einigen Ausführungsformen kann eine Überwachungsstation 103 vorgesehen sein, die eine Überwachungseinheit 2 aufweisen kann. Die Überwachungsstation 103 kann eine Kontrolleinheit 8 aufweisen. Die Überwachungsstation 103 kann dazu eingerichtet sein, einen charakteristischen Wert 10 eines sich an, in oder bei der Überwachungsstation befindlichen und/oder eines durch die Überwachungsstation 103 fahrenden Carriers und/oder Überwachungscarriers 1 zu erfassen. Die Überwachungsstation 103 kann eine Carrierprüfstation 103 sein oder aufweisen. Die Carrierprüfstation 103 kann dazu eingerichtet sein, einen charakteristischen Wert 10 eines durch und/oder entlang der Carrierprüfstation 103 verfahrbaren Überwachungscarriers 1, Carriers 1 und/oder einer von einem Carrier 1 transportierten Tasche 7 zu erfassen.

In einigen Ausführungsformen kann ein Überwachungscarrier 1 die Überwachungseinheit 2 aufweisen. In einigen anderen Ausführungsformen kann alternativ oder zusätzlich die Überwachungseinheit 2 an, in oder bei der Schiene, und/oder im Schienenabschnitt bzw. Streckenabschnitt und/oder einer Funktionseinheit fest angeordnet sein.

Der charakteristische Wert 10 des Hängeförderersystems 100 kann z.B. ein charakteristischer Wert 10 einer Überwachungsstation 103, einer Ladestation 104, einer Entladestation 105, eines Taschensorters, z.B. eines Matrixsorters 106, eines Taschenpuffers 107 und/oder einer Weiche 108 sein oder aufweisen. In einigen Ausführungsformen kann der charakteristische Wert 10 auch ein charakteristischer Wert 10 eines Überwachungscarriers 1 und/oder eines Carriers sein oder aufweisen. Der charakteristische Wert 10 kann beispielsweise eine Temperatur, eine Magnetfeldstärke, eine Magnetfeldrichtung, eine Beschleunigung, eine Position, ein Abstand, eine Höhe z.B. über einer Referenzebene, eine Verformung, eine Kraft, ein Druck, ein Impuls, eine Schwingung, eine Vibration, ein Geräusch, ein Bild und/oder ein Video sein oder aufweisen. Die Überwachungseinheit 2 kann entsprechend einen oder mehrere geeignete Sensoren und/oder Detektoren zum Erfassen eines oder mehrerer charakteristischer Werte aufweisen. Beispielsweise kann die Überwachungseinheit 2 einen Temperatursensor, einen Widerstandssensor, einen Magnetfeldmesssensor, einen Beschleunigungssensor, ein Gyroskop, einen Aufprallsensor, einen Drucksensor, einen Dehnungsmessstreifen, einen Positionssensor, z.B. einen GPS-Sensor, eine Kamera, z.B. eine optische Kamera, eine RGBD-Kamera, einen LIDAR-Scanner, eine LIDAR-Kamera und/oder eine Wärmebildkamera, ein Mikrofon, einen RFID-Leser und/oder einen fotoelektrischen Sensor aufweisen. Die Überwachungseinheit 2 kann in einigen Ausführungsformen auch mehr als einen der entsprechenden Sensoren aufweisen. Es kann vorgesehen sein, dass Überwachungseinheit 2, z.B. eine oder die Kamera, in Richtung des Bodens und/oder nach unten gerichtet sein kann. Damit können beispielsweise aus der Tasche gefallene Gegenstände von Überwachungseinheit 2, z.B. einer Kamera, erfasst sein oder werden.

In einigen Ausführungsformen kann die Überwachungseinheit 2 einen Temperatursensor aufweisen. Der charakteristische Wert 10 kann eine Temperatur sein oder aufweisen, beispielsweise des Überwachungscarriers und/oder der Laufrolle 3 des Überwachungscarriers, oder einer Funktionseinheit und/oder einer Schiene oder Schienenabschnitts. Alternativ oder zusätzlich kann die Überwachungseinheit 2 eine Wärmebildkamera aufweisen und der charakteristische Wert 10 eine Temperatur, Wärme und/oder Wärmefluss umfassen.

In einigen Ausführungsformen kann die Überwachungseinheit 2 einen Widerstandssensor aufweisen. Der charakteristische Wert 10 kann einen Rollwiderstand und/oder einen Reibwert der Laufrolle 3 umfassen.

In einigen Ausführungsformen kann die Überwachungseinheit 2 dazu eingerichtet sein, eine Magnetfeldstärke und/oder eine Magnetfeldrichtung eines Magnetfelds zu umfassen. In einigen Ausführungsformen kann das Magnetfeld dazu eingerichtet sein, einen Carrier und/oder Überwachungscarrier 1 magnetisch mit einem Mitnehmer eubes Trum des Hängeförderers 100 zu koppeln. Die Überwachungseinheit 2 kann ein Magnetfeldmessgerät sein oder aufweisen.

Die Überwachungseinheit 2 kann einen Beschleunigungssensor aufweisen. Der charakteristische Wert 10 kann eine Beschleunigung eines Carriers, eines Überwachungscarriers 1 und/oder einer Tasche umfassen. Der charakteristische Wert 10 kann eine Schwingung und/oder Vibration einer Funktionseinheit oder eines Teils einer Funktionseinheit, einer Schiene und/oder Schienenabschnitts, eines Carriers, eines Überwachungscarriers 1 und/oder einer Tasche umfassen.

Die Überwachungseinheit 2 kann einen Positionssensor aufweisen. Der charakteristische Wert 10 kann eine Position eines Carriers, Überwachungscarriers 1 und/oder einer Tasche umfassen.

Die Überwachungseinheit 2 kann einen Kraftsensor, bevorzugt einen Aufprallsensor oder einen Drucksensor, aufweisen. Der charakteristische Wert 10 kann eine Verformung, eine Kraft, einen Druck und/oder Impuls umfassen, beispielsweise eines Carriers, eines Überwachungscarriers 1, eines Schienenelements oder Schienenabschnitts, und/oder einer Funktionseinheit oder eines Teils einer Funktionseinheit. Der Kraftsensor kann dazu eingerichtet sein, ein Aufprallen eines Carriers und/oder eines Überwachungscarriers 1 zu erfassen. Alternativ oder zusätzlich kann die Überwachungseinheit 2 einen Dehnungsmessstreifen aufweisen.

Die Überwachungseinheit 2 kann eine optische Kamera aufweisen und der charakteristische 10 Wert ein Bild und/oder ein Video umfassen. Die optische Kamera kann dazu eingerichtet sein, ein Bild und/oder Video eines Carriers, eines Überwachungscarriers 1, und/oder einer Tasche zu erfassen. Alternativ oder zusätzlich kann die optische Kamera dazu eingerichtet sein, ein Bild und/oder Video des Hängeförderers 101, z.B. einer Funktionseinheit oder eines Teils einer Funktionseinheit und/oder einer Schiene oder Schienenabschnitts zu erfassen.

Die Überwachungseinheit 2 kann ein Mikrophon aufweisen. Der charakteristische Wert 10 kann ein Geräusch, z.B. ein Betriebsgeräusch, umfassen.

Die Überwachungseinheit kann einen fotoelektrischen Sensor aufweisen. Der charakteristische Wert 10 kann einen Abstand eines Carriers und/oder Überwachungscarriers 1 zu einem weiteren Carrier und/oder Überwachungscarrier 1 umfassen. Alternativ oder zusätzlich kann der fotoelektrische Sensor dazu eingerichtet sein, eine Höhe eines Carriers und/oder eines Überwachungscarriers 1, z.B. über einer Referenzebene, umfassen. In einigen Ausführungsformen kann der fotoelektrische Sensor kann eine Lichtschranke sein oder aufweisen. Der fotoelektrische Sensor ist aber nicht auf Lichtschranken beschränkt.

In einigen Ausführungsformen kann die Überwachungseinheit 2 einen Positionssensor aufweisen. Der Positionssensor kann einen Satellitennavigationssensor, beispielsweise einen GPS-Sensor, umfassen. Alternativ oder zusätzlich kann der Positionssensor dazu eingerichtet sein und/oder dazu dienen, die Position mittels Bluetooth, beispielsweise Bluetooth AoA (Angle of Arrival) oder WLAN zu bestimmen. Mit dem Positionssensor kann die Position der Überwachungseinheit 2 bestimmt sein oder werden. Weist ein Überwachungscarrier 1 einen Positionssensor auf, so kann die Position des Überwachungscarrier 1 bestimmt sein oder werden. In einigen Ausführungsformen kann alternativ oder zusätzlich vorgesehen sein, die Position z.B. durch mechanische Markierungen entlang der Förderstrecke zu bestimmen. Alternativ oder zusätzlich kann die Position durch eine oder mehrere Kameras erfasst sein oder werden. Es kann auch vorgesehen sein, die Position über RFID oder RFID-Tags zu bestimmen. Der Positionssensor kann in einigen Ausführungsformen einen geeigneten RFID-Transponder umfassen. In einigen Ausführungsformen kann vorgesehen sein, einen erfassten charakteristischen Wert 10 mit einer Position zu verknüpfen, z.B. mit der Position der Überwachungseinheit 2 beim Erfassen des charakteristischen Werts 10. Ein charakteristischer Wert 10 kann eine Position und/oder Positionsdaten umfassen.

In einigen Ausführungsformen kann eine Neigung, Pendelns und/oder Verschwenkung des Carriers 1 und/oder des Überwachungscarriers 1, beispielsweise relativ zu einer Schiene, erfasst sein oder werden. In einigen Ausführungsformen kann eine Neigung, Pendeln und/oder Verschwenkung einer Tasche 7, beispielsweise relativ zu einer Schiene, erfasst sein oder werden. Der charakteristische Wert 10 kann eine Neigung, einen Neigungswinkel, eine Verschwenkung oder dergleichen umfassen und/oder repräsentieren. Beispielsweise kann eine Neigung des Carriers 1, Überwachungscarriers 1 und/der Tasche 7 in einer Steigestrecke oder Gefällestrecke, z.B. des Hängeförderers 101, erfasst sein oder werden.

Alternativ oder zusätzlich kann ein Staudruck in einer Staustrecke, z.B. des Hängeförderers 101, erfasst sein oder werden.

Der oder die charakteristischen Werte 10 können dazu dienen, eine Analyse eines Zustands einer entsprechenden Funktionseinheit oder eines Carriers und/oder Überwachungscarriers durchzuführen. Es kann vorgesehen sein, jeweils einem charakteristischen Wert 10 einen Timestamp zuzuordnen oder zu verknüpfen, und/oder beim Erfassen eines charakteristischen Werts 10 einen Timestamp zu erzeugen. Der Timestamp kann demjenigen Zeitpunkt entsprechend oder abbilden, zu dem der entsprechende charakteristische 10 Wert erfasst ist. Alternativ oder zusätzlich kann ein charakteristischer Wert 10 den Zeitpunkt umfassen, zu dem der charakteristische Wert 10 erfasst worden ist. In einigen Ausführungsformen kann vorgesehen sein, ein Zustandsprofil zu bestimmen und/oder zu ermitteln, beispielsweise als Funktion oder Verlauf über der Zeit. In einigen Ausführungsformen kann vorgesehen sein, eine Erkennung defekter Teile anhand eines oder mehrerer charakteristischen Werte 10 durchzuführen. In einigen Ausführungsformen kann eine Log-Nachricht basierend auf einem oder mehreren erfassten charakteristischen Werten 10 erstellt sein oder werden.

In einigen Ausführungsformen können die charakteristischen Werte 10 für eine Fernwartung des Hängeförderersystems 100 und/oder des Hängeförderer 101 verwendet sein oder werden. Die erfassten charakteristischen Werte 10 können an eine Kontrollstation 102 übermittelt sein oder werden. Die Kontrollstation 102 kann dazu eingerichtet sein, eine, mehrere oder alle der beschriebenen Analysen, Untersuchungen, Zustandsbestimmungen und dergleichen durchzuführen. Die von der Kontrollstation 102 durchgeführten Analysen, Untersuchungen, Zustandsbestimmungen und dergleichen können für eine Fernwartung an ein externes Gerät 113 übermittelt sein oder werden. Das externe Gerät 113 kann ein Computergerät sein oder aufweisen. Das externe Gerät 113 kann in einigen Ausführungsformen ein Server sein oder aufweisen, und/oder ein Cloud-Server sein oder aufweisen.

In einigen Ausführungsformen kann vorgesehen sein, eine Schiene, einen Schienenabschnitt und/oder einen Streckenabschnitt eines Hängeförderers 101 zu inspizieren. Die Inspektion kann beispielsweise dazu dienen, mechanische Verformungen einer Schiene oder eines Schienennetzes zu erkennen, Kommunikations-und/oder Stromversorgungselemente zu überprüfen und/oder Hindernisse oder verlorene Gegenstände, z.B. verloren gegangenes Transportgut, in der Nähe der Schiene, des Schienennetzes und/oder Sicherheitsnetze an oder bei der Schiene zu detektieren. Das Schienennetz kann unterhalb der Schiene angeordnet sein, beispielsweise, um aus einer Tasche gefallene Gegenstände aufzufangen. Ein Überwachungscarrier 1 kann eine oder mehrere Kameras aufweisen, die z.B. zur Inspektion dienen können. Die Kamera kann geeignet ausgerichtet sein. Die Überwachungseinheit 2 kann eine oder die Kamera sein oder aufweisen. Die Kamera kann beispielsweise eine optische Kamera sein oder aufweisen, und/oder der charakteristische Wert 10 kann ein Bild und/oder Video umfassen. Alternativ oder zusätzlich kann die Kamera eine RGBD-Kamera, eine LIDAR-Kamera oder einen LIDAR-Scanner, und/oder Radar-Erfassungseinheit sein oder aufweisen, und/oder der charakteristische Wert 10 Tiefendaten oder Abstandsdaten umfassen.

In einigen Ausführungsformen kann die Überwachungseinheit 2 ein fotoelektrischer Sensor sein oder aufweisen. Der fotoelektrische Sensor kann dazu eingerichtet sein, einen Abstand zwischen zwei Carrier, zwischen zwei Überwachungscarrier 1 und/oder zwischen einem Carrier und einem Überwachungscarrier 1 zu ermitteln. Es kann auch vorgesehen sein, dass Abstände und/oder der Abstand zwischen zwei Carriern alternativ oder zusätzlich durch eines oder mehrere aus RGBD-Kamera, eine LIDAR-Kamera oder einen LIDAR-Scanner, und/oder Radar-Erfassungseinheit der Überwachungseinheit 2 ermittelt sein oder werden kann. In einigen Ausführungsformen kann der fotoelektrische Sensor dazu eingerichtet sein, verloren gegangenes Transportgut zu detektieren, beispielsweise durch ein Sicherheitsnetz aufgefangenes Transportgut. In einigen anderen Ausführungsformen kann alternativ oder zusätzlich der fotoelektrische Sensor dazu eingerichtet sein, einen Trum des Hängeförderers 101, z.B. einen Antriebtrum, zu überwachen und/oder Verformungen des Stroms zu detektieren. In einigen anderen Ausführungsformen kann alternativ oder zusätzlich der fotoelektrische Sensor dazu eingerichtet sein, einen Verschleiß der Laufrollen 3 des Carriers und/oder Überwachungscarriers 1 zu erfassen.

In einigen Ausführungsformen kann vorgesehen sein, anhand eines oder mehrerer charakteristischer Werte 10, z.B. erfasster Beschleunigungen oder Geräuschen, eine Schwingungsanalyse durchzuführen. Beispielsweise kann eine Schwingungsanalyse einer Schiene, eines Schienenabschnitts und/oder einer Funktionseinheit oder eines Bauteils einer Funktionseinheit des Hängeförderersystems 100 durchgeführt sein oder werden. Strukturelle Fehler in einem Maschinensystem, z.B. Funktionseinheiten und/oder Teile dieser, können Änderungen der dynamischen Eigenschaften verursachen, die sich in den Schwingungssignal widerspiegeln können. Die Schwingungsanalyse kann Informationen über Amplituden und Frequenzen der Schwingungen liefern. Damit können Quellen, beispielsweise potentielle oder tatsächliche Fehlerquellen, identifiziert sein oder werden. In einigen Ausführungsformen kann die Schwingungsanalyse auf von einer von einer Überwachungseinheit 2 gemessenen Beschleunigungen basierend erfolgen. In einigen Ausführungsformen können Beschleunigungen Hinweise auf wirkende Kräfte geben. In einigen Ausführungsformen können die Beschleunigung in eine, zwei oder drei Raumrichtungen erfasst sein oder werden. Stöße, die z.B. durch Unebenheiten in Schienenprofilen verursacht sein können, können beispielsweise als Spitzen in einem Beschleunigungsdiagramm erkennbar sein. In einigen Ausführungsformen kann vorgesehen sein, dass eine oder die Beschleunigungen erfassende Überwachungseinheit 2 fest an, bei oder in einer Schiene, schienen Abschnitt und/oder Streckenabschnitt, und/oder Funktionseinheit befestigt oder angeordnet ist. Es kann vorgesehen sein, dass die Überwachungseinheit 2 einen charakteristischen Wert, 10, z.B. in diesem Fall eine oder mehrere Beschleunigungen, erfassen kann, wenn ein Carrier und/oder ein Überwachungscarrier 1 entlang oder zumindest in der Nähe der Überwachungseinheit 2 verfahren ist oder wird. Alternativ oder zusätzlich kann der Überwachungscarrier 1 eine Überwachungseinheit 2 aufweisen, die dazu eingerichtet sein kann, einen entsprechenden charakteristischen Wert 10, z.B. in diesem Fall eine oder mehrere Beschleunigungen, zu erfassen. In einigen Ausführungsformen können weitere Daten und/oder Betriebsparameter erfasst sein oder werden, die in die Schwingungsanalyse einfließen können. Beispielseise kann der lokale Betriebszustand, d.h. der Betriebszustand und/oder Betriebsparameter von sich in der Nähe der Überwachungseinheit 2 befindlichen Komponenten des Hängeförderers, erfasst und/oder berücksichtigt sein oder werden. Alternativ oder zusätzlich kann eine Beladung eines Carriers, z.B. die Menge, Gewicht und/oder Art von dem Carrier transportierten Transportguts, erfasst und/oder berücksichtig sein oder werden.

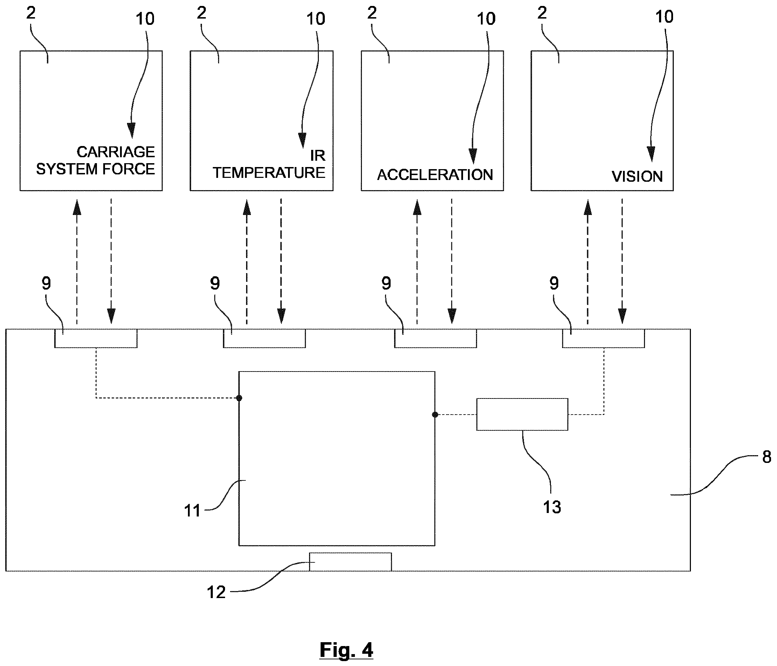

Figur 4 zeigt eine schematische und beispielhafte Darstellung einer Kontrolleinheit 8. Der Überwachungscarrier 1 kann eine Kontrolleinheit 8 aufweisen. Die Kontrolleinheit 8 kann eine Carrierkontrolleinheit sein. Die Kontrolleinheit 8 kann über eine Schnittstelle 9 mit einer Überwachungseinheit 2 verbunden sein. Die Kontrolleinheit 8 kann über die Schnittstelle 9 einen von der Überwachungseinheit 2 erfassten charakteristischen Wert empfangen. Die Kontrolleinheit 8 kann über die Schnittstelle 9 die Überwachungseinheit 2 ansteuern. Ist die Kontrolleinheit 8 mit mehr als einer Überwachungseinheit 2 verbunden, so kann jeweils eine entsprechende Schnittstelle 9 vorgesehen sein. Beispielsweise kann die Kontrolleinheit 8 mit einem Kraftsensor, einem Temperatursensor, einem Beschleunigungssensor und einer Kamera verbunden sein. Die Schnittstelle 9 kann beispielsweise ein BUS, z.B. CAN BUS oder Ethernet sein oder aufweisen. In einigen Ausführungsformen kann die Verbindung zwischen Kontrolleinheit 8 und mindestens einer über Wartungseinheit 10 drahtlos erfolgen, z.B. über narrowband-IOT, Bluetooth, WLAN, GSM, Zigbee, LTE, Z-Wave, LoRaWAN, NFC, geeignete low-power wide-area network (LPWAN) Protokolle und/oder geeignete andere drahtlose Protokolle. Die Kontrolleinheit 8 kann einen Datenspeicher 11 aufweisen. Die empfangenen charakteristischen Werte 10 können in einem Datenspeicher 11 hinterlegt sein oder werden. Der Datenspeicher 11 kann eine Datenbank sein oder aufweisen, oder Teil einer Datenbank sein. Die Datenbank kann lokale Analysen und/oder gezielte Abfragen durch die Kontrolleinheit 8, externe Geräte 113, oder sonstige mit der Datenbank verbundene Computergeräte ermöglichen. Mindestens einer, mehrere oder alle charakteristischen Werte 10 können eine Position und/oder einen Timestamp umfassen, und/oder eine Position und/oder ein Timestamp kann mit mindestens einem, mehreren oder allen charakteristischen Werten 10 verknüpft sein oder werden. Die Kontrolleinheit 8 kann eine Computereinheit aufweisen. Die Computereinheit kann dazu eingerichtet sein, vor, bei oder nach dem Hinterlegen der empfangenen charakteristischen Werte 10 in dem Datenspeicher 11 die charakteristischen Werte 10 zu komprimieren und/oder eine Kompression 13 durchzuführen. Umfasst beispielsweise der charakteristische Wert 10 ein Bild, so kann die Computereinheit das Bild komprimieren, beispielsweise durch eine JPEG-Kompression. Videos können beispielsweise durch geeignetes Video-Encoding komprimiert sein oder werden, z.B. MPEG. Zeitreihendaten können z.B. durch Deltadelta encoding, Simple-8b oder XOR-based komprimiert sein oder werden. Die Kompression 13 kann auch Methoden wie deflate, zstandard, brotli, lzma oder dergleichn umfassen. Es sind auch andere als die hier aufgeführten Kompressionsmethoden möglich. Durch Kompression 13 kann der Speicherbedarf und/oder die Größe des charakteristischen Werts 10 reduziert sein oder werden. Die Computereinheit kann dazu eingerichtet sein, bei, vor oder nach dem Hinterlegen der empfangenen charakteristischen Werte 10 eine Vorverarbeitung, durchzuführen, beispielsweise ein Spektrogramm aus Vibrationsdaten oder Schwingungsdaten zu erzeugen. Die Kontrolleinheit 8 kann eine Funkschnittstelle 12 aufweisen. Über Funkschnittstelle 12 kann einer, mehrere oder alle der erfassten charakteristischen Werte 10 von der Kontrolleinheit 8 und/oder der Überwachungseinheit 2 übermittelt werden, z.B. an eine Kontrollstation 102, z.B. eine Kontrollstation 102 eines Hängeförderersystems 100. Die Übermittlung kann drahtlos über eine Funkverbindung 14 erfolgen, z.B. über narrowband-IOT, Bluetooth, WLAN, GMS, Zigbee, LTE und/oder geeignete drahtlose Protokolle. Alternativ oder zusätzlich kann vorgesehen sein, die Übertragung kabelgebunden über eine kabelgebundene Verbindung 15 durchzuführen, wobei die Kontrolleinheit 8 und/oder der Überwachungscarrier 1 eine geeignete Schnittstelle haben kann.

Der Überwachungscarrier und/oder die Kontrolleinheit 8 kann einen Datenspeicher aufweisen. In dem Datenspeicher können Daten, beispielsweise erfasst charakteristische Werte 10, hinterlegt sein oder werden. Die in dem Datenspeicher hinterlegten Daten und/oder charakteristischen Werte 10 können über die Kommunikationsschnittstelle 9 übermittelt sein oder werden, beispielsweise an die Kontrollstation 102. Es kann alternativ oder zusätzlich vorgesehen sein, die in dem Datenspeicher hinterlegten Daten beispielsweise über eine kabelgebundene Verbindung auszulesen. In einigen Ausführungsformen kann z.B. ein Computergerät, z.B. ein Laptop, über eine kabelgebundene Verbindung mit dem Überwachungscarrier 1, der Kontrolleinheit 8 und/oder dem Datenspeicher zum Datenaustausch verbunden sein oder werden, und/oder über eine oder die kabelgebundene Verbindung den Datenspeicher auslesen. Es kann vorgesehen sein, dass der Überwachungscarrier 1 beim Auslesen des Datenspeichers, z.B. über die kabelgebundene Verbindung, angehalten bzw. gestoppt ist oder wird.

Ein beispielhafter Ablauf zur Erfassung eines charakteristischen Werts 10 wird nachfolgend beschrieben. Auf einen Steuerbefehl (Control command: enable sensor) kann eine Auslösungsbedingung (set new trigger) gesetzt und/oder gewählt sein oder werden. In einigen Ausführungsformen kann die Auslösungsbedingung in dem Steuerbefehl enthalten sein, und/oder extern vorgegeben sein oder werden. Ist die Auslösungsbedingung erfüllt, so kann ein Befehl an eine Überwachungseinheit 2 z.B. über Schnittstelle 9 übermittelt werden (send request message), auf den die Überwachungseinheit 2 einen charakteristischen Wert 10 erfassen kann (measure sensor valuue). Der erfasste charakteristische Wert 10 (sensor data) kann anschließend empfangen werden (receive response message). In einigen Ausführungsformen kann alternativ oder zusätzlich eine Position, insbesondere des Carriers 1 oder des Überwachungscarriers 1, bestimmt sein oder werden. Dazu kann ein Befehl an einen Positionssensor, z.B. einen GPS-Sensor oder eine RFID-Leser, übermittelt werden, oder allgemein ein Befehl zur Bestimmung der Position ausgegeben sein oder werden (requerst current position). Die Position kann daraufhin bestimmt werden (position) und empfangen werden (receive current position). Der charakteristische Wert 10, und/oder ggf. die Position und/oder Timestamp bzw. Erfassungszeit, kann in dem Datenspeicher 11 hinterlegt werden (store in data list). In einigen Ausführungsformen kann vor dem Hinterlegen geprüft werden, ob in dem Datenspeicher genug freier Platz vorhanden ist. Es kann vorgesehen sein, dass der Datenspeicher ein Ringpuffer ist oder aufweist, so dass die ältesten in dem Datenspeicher hinterlegten Daten überschrieben sein oder werden können und zumindest immer die aktuellsten Daten in dem Datenspeicher vorgehalten sein oder werden können. Alternativ oder zusätzlich kann der charakteristische Wert 10, und/oder ggf. die Position, unmittelbar an die Funkschnittstelle 12, und/oder ggf. eine entsprechende kabelgebundene Schnittstelle, übermittelt werden, und von dieser an ein Gateway, z.B. Gateway 110, und/oder Kontrollstation 102 übermittelt werden. Alternativ oder zusätzlich kann vorgesehen sein, dass geprüft wird, ob ein Sendelimit erreicht und/oder überschritten ist (send limit reached). Das Sendelimit kann einer maximale Datengröße der an Gateway und/oder Kontrollstation 102 zu übermittelnden Daten entsprechen. Ist das Sendelimit nicht erreicht, so kann in einigen Ausführungsformen vorgesehen sein, einen neue Auslösungsbedingung zu erstellen und/oder zu empfangen (set new trigger), so dass ein weiterer charakteristischer Wert 10, und/oder ggf. eine weitere Position, erfasst sein oder werden kann. Es kann vorgesehen sein, dass periodisch Daten erfasst sind oder werden, und/oder der beschriebene Ablauf periodisch durchgeführt sein oder werden kann.

Ist das Sendelimit erreicht, so kann in einigen Ausführungsformen zunächst geprüft werden, ob eine Verbindung, insbesondere eine Funkverbindung (WLAN connected?) besteht. Ist dies der Fall kann, vorgesehen sein, den erfassten charakteristische Wert 10, und/oder ggf. die Position, und/oder die in dem Datenspeicher 11 hinterlegten charakteristischen Wert 10, und/oder ggf. Positionen, an das Gateway und/oder Kontrollstation 102 zu übertragen (send to gateway). Besteht keine Funkverbindung, so kann in einigen Ausführungsformen zunächst geprüft sein oder werden, ob das Sendelimit (max limit reached?) erreicht und/oder der Datenspeicher voll ist. Ist das Sendelimit erreicht und/oder der Datenspeicher voll, kann ein Teil der Daten verworfen werden (discard data). In einigen Ausführungsformen kann der zuletzt erfasste charakteristische Wert 10, und/oder die zuletzt erfasste Position, verworfen werden. In einigen Ausführungsformen kann alternativ oder zusätzlich der zuerst erfasste charakteristische Wert 10, und/oder die zuerst erfasste Position, verworfen werden. Mit "zuerst erfasst" kann derjenige charakteristische Wert 10 und/oder Position gemeint sein, der oder die von den in dem Datenspeicher 11 hinterlegten Daten der oder die früheste und/oder am weitesten in der Vergangenheit liegende ist. Ist das Sendelimit nicht erreicht und/oder der Datenspeicher nicht voll, so kann in einigen Ausführungsformen vorgesehen sein, einen neue Auslösungsbedingung zu erstellen und/oder zu empfangen (set new random trigger), so dass ein weiterer charakteristischer Wert 10, und/oder ggf. eine weitere Position, erfasst sein oder werden kann.

Es kann vorgesehen sein, dass an das Gateway und/oder an die Kontrolleinheit 8 und/oder Kontrollstation 102 übermittelte Daten aus dem Datenspeicher 11 gelöscht werden können. Der beschriebene Ablauf zur Erfassung eines charakteristischen Werts 10 ist lediglich ein Beispiel. Es sind andere Abläufe zur Erfassung eines charakteristischen Werts 10 möglich. Kontrolleinheit 8 kann dazu eingerichtet sein, einen oder mehrere Abläufe zur Erfassung eines charakteristischen Werts 10 durchzuführen.

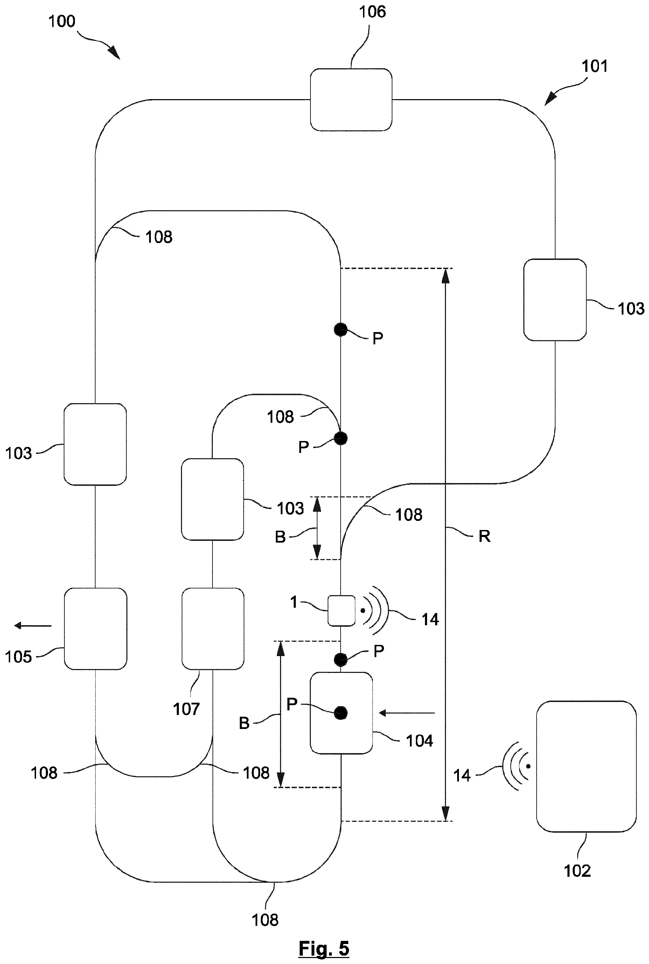

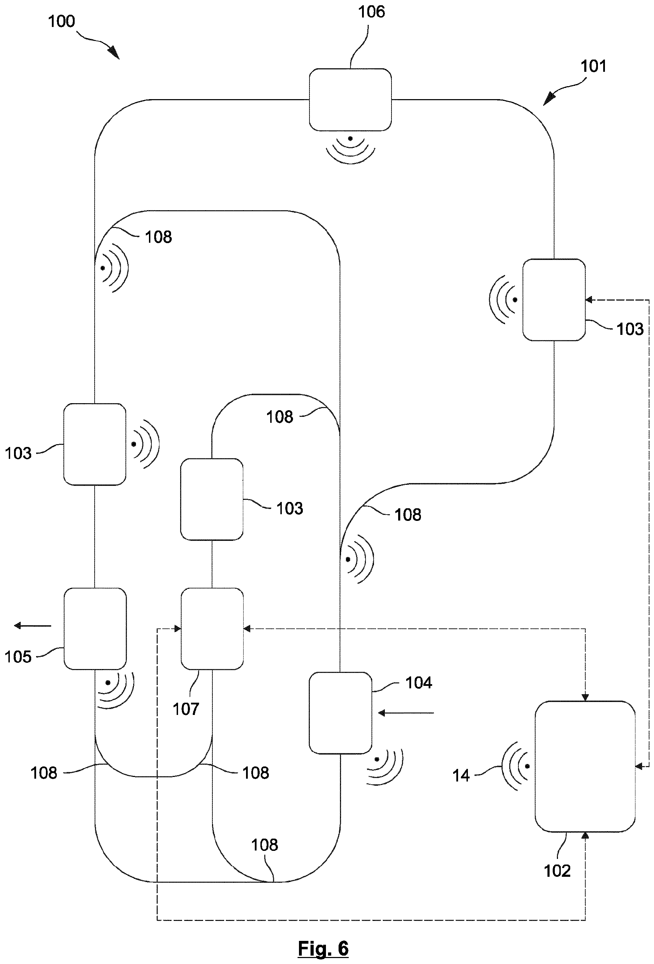

Figuren 5 und 6 zeigen Ausführungsbeispiele eines Hängeförderersystems 100. Das Hängeförderersystem 100 kann einen Hängeförderer 101 aufweisen. Das Hängeförderersystem kann ein Überwachungssystem aufweisen. Das Hängeförderersystem 100 und/oder das Überwachungssystem kann eine oder mehrere Überwachungseinheiten 2 aufweisen. Das Hängeförderersystem 100, und/oder eine der Hängeförderer 100 kann eine oder mehrere Funktionseinheiten, z.B. einen Hängeförderer 101, eine oder mehrere Überwachungsstationen 103, eine oder mehrere Beladestationen 104, eine oder mehrere Entladestationen 105, einen oder mehrere Taschensorter, z.B. Matrixsorter 106, einen oder mehrere Taschenpuffer 107 und/oder eine oder mehrere Weichen 108 aufweisen. Die in den Figuren 5 und 6 gezeigten Ausführungsbeispiele sind lediglich beispielhaft. Die in den Figuren 5 und 6 gezeigten Ausführungsbeispiele können eines, mehrere oder alle der vorstehend und/oder nachfolgend beschriebenen oder offenbarten Merkmale und/oder Vorteile aufweisen.

Das Hängeförderersystem 100 und/oder das Überwachungssystem kann eine Kontrollstation 102 aufweisen. Die Kontrollstation 102 kann mit der Überwachungseinheit 2 zum Datenaustausch verbundenen sein. Die Überwachungseinheit 2 kann dazu eingerichtet sein, einen charakteristischen Wert 10 des Hängeförderers 100 und/oder des Carriers 1 zu erfassen und an die Kontrollstation 102 zu übermitteln. Es kann vorgesehen sein, dass mindestens eine der Überwachungseinheiten 2 an oder bei dem Hängeförderer 101 angeordnet sein kann, beispielsweise an oder bei einer Funktionseinheit, Schiene, Weiche, Vereinzelungsvorrichtung oder einer Station des Hängeförderers 101.

Der Hängeförderer 101 und/oder das Hängeförderersystem 100 kann einen oder mehrere Carrier zum Transportieren von Transportgut aufweisen. Der Hängeförderer 101 kann ein Taschenförderer und/oder Taschensorter sein oder aufweisen. Die Carrier können dazu eingerichtet sein, Taschen zu tragen. Die Taschen können Transporttaschen sein, die dazu eingerichtet sein oder verwendet werden können, Transportgut zu transportieren. Der Carrier kann eines, mehrere oder alle der mit Bezug auf den Überwachungscarrier 1 offenbarten Merkmale und/oder Vorteile aufweisen. Weist ein Carrier eine Überwachungseinheit 2 auf, so ist in mindestens einer Ausführungsform dieser Carrier ein Überwachungscarrier 1. In einigen Ausführungsformen kann eines, mehrere oder alle der Überwachungscarrier 1 dazu eingerichtet sein, Transportgut zu fördern. In einigen Ausführungsformen kann allerdings auch vorgesehen sein, dass einer, mehrere oder alle Überwachungscarrier 1 kein Transportgut fördern und/oder nicht dazu eingerichtet sein können. In einigen Ausführungsformen können Überwachungscarrier 1 und Carrier voneinander verschieden sein und/oder verschiedene Funktionen erfüllen. In einigen Ausführungsformen kann Überwachungscarrier 1 ausschließlich der Überwachung des Hängeförderersystems 100 dienen. Weist ein Überwachungscarrier 1 eine Tasche 7 auf, so kann vorgesehen sein, dass diese Tasche 7 nicht zum Transport von Transportgut dient.

Die Ladestation 104 kann dazu eingerichtet sein, Transportgut in den Hängeförderer 101 einzubringen. Der Hängeförderer 101 kann beispielsweise ein Taschenförderer sein oder aufweisen. In diesem Fall kann die Ladestation 104 beispielsweise Transportgut in Taschen des Taschenförderers füllen und/oder eingeben. Die Entladestation 105 kann dazu eingerichtet sein, Transportgut aus dem Hängeförderer 101 zu entnehmen. Beispielsweise kann die Entladestation 105 dazu eingerichtet sein, Transportgut aus Taschen des Hängeförderers 101 zu entladen.

Der Taschensorter kann dazu eingerichtet sein, Taschen und/oder Carrier des Hängeförderers 101 in einer bestimmten Reihenfolge aufzunehmen und in einer bestimmten Reihenfolge auszugeben. Die Reihenfolge der Ausgabe kann von der Reihenfolge der Annahme verschieden sein. Der Taschensorter kann dazu eingerichtet sein, die Reihenfolge von Taschen und/oder Carrier zu verändern, und/oder Taschen und/oder Carrier in eine bestimmte Reihenfolge zu bringen. Die jeweiligen Reihenfolgen können vorgegeben sein oder werden, und/oder verändert sein oder werden, auch im laufenden Betrieb. Der Taschensorter kann ein Matrixsorter 106 sein oder aufweisen.

Der Taschenpuffer 107 kann dazu eingerichtet sein, Carrier und/oder Taschen zu Puffern und/oder zu speichern. Taschenpuffer 107 kann ein dynamischer Speicher sein oder aufweisen.

Hängeförderersystem 100 und/oder Hängeförderer 101 kann eine oder mehrere Überwachungsstationen 103 aufweisen. Die Überwachungsstation 103 kann mindestens eine Überwachungseinheit 2 aufweisen. In einigen Ausführungsformen kann die Überwachungsstation 103 eine Kontrolleinheit 8 aufweisen. Die Kontrolleinheit 8 kann eines, mehrere oder alle der vorstehend beschriebenen Merkmale und Vorteile aufweisen. Die Kontrolleinheit 8 der Überwachungsstation 103 kann der Carrierkontrolleinheit ähnlich sein, und/oder einige, mehrere oder alle Merkmale und Vorteil der Carrierkontrolleinheit aufweisen. Die Überwachungsstation 103 kann dazu eingerichtet sein, durch die Überwachungsstation 103 geführte Carrier und/oder Überwachungscarrier 1 zu überwachen und/oder einem charakteristischen Wert 10 eines durch die Überwachungsstation 103 geführten Carriers und/oder Überwachungscarriers 1 zu erfassen. In einigen Ausführungsformen kann, wenn ein Carrier und/oder Überwachungscarrier 1 des Hängeförderers 100 in dem Schienenabschnitt verfahren ist oder wird, die Überwachungseinheit 2 der Überwachungsstation 103 einen für den Carrier, Überwachungscarrier 1 und/oder den Schienenabschnitt charakteristischen Wert 10 erfassen. Die Überwachungsstation 103 kann an oder bei einem Schienenabschnitt des Hängeförderers angeordnet sein. Die Überwachungsstation 103 kann eine Carrierprüfstation 103 sein oder aufweisen. Die Carrierprüfstation 103 kann eine Überwachungsstation 103 sein oder aufweisen.

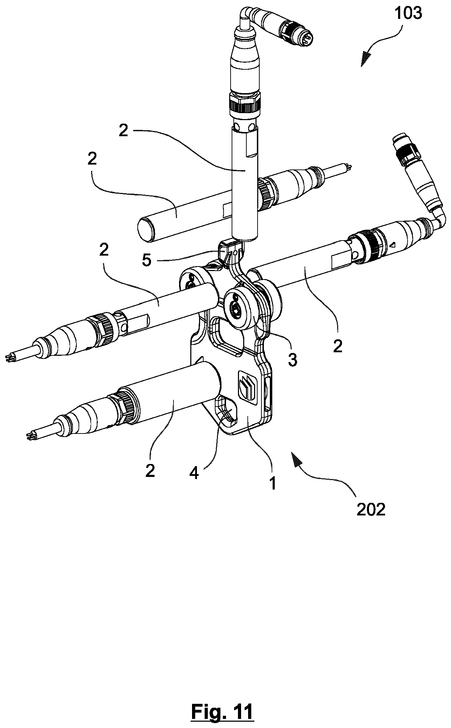

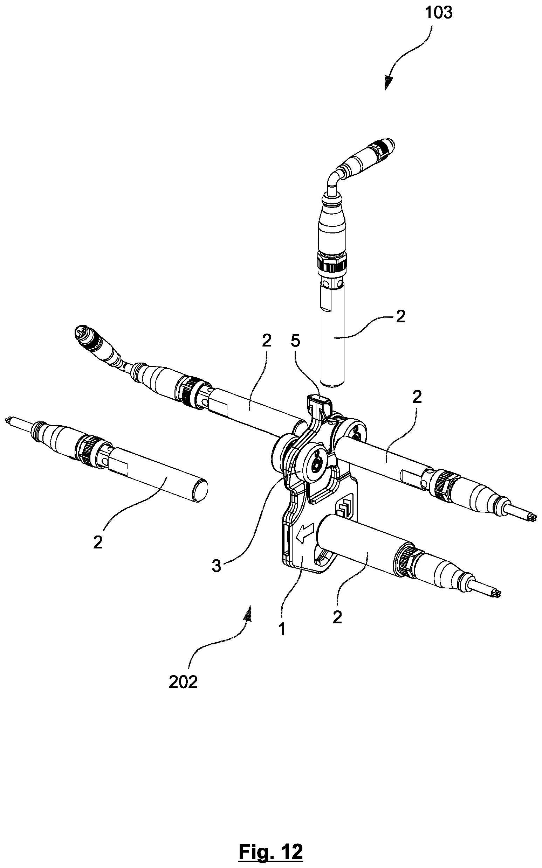

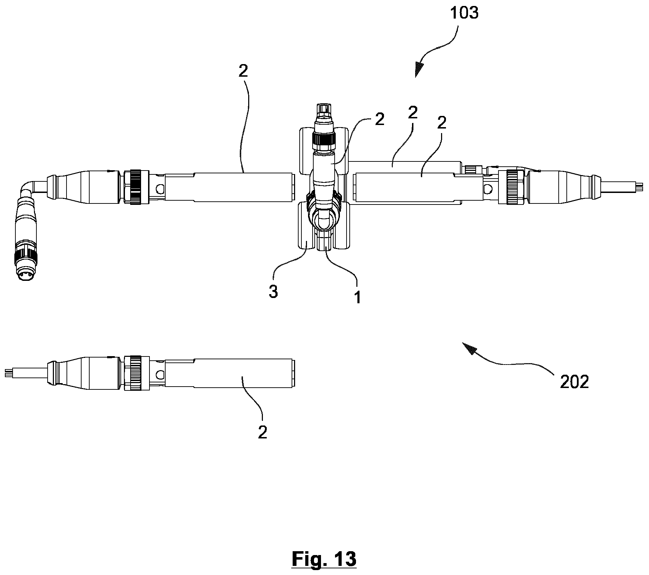

Beispielhafte Ausführungsformen einer Carrierprüfstation 103 sind in den Figuren 11 bis 13 gezeigt.

Die Carrierprüfstation 103 kann zum Überprüfen eines Carriers eines Hängeförderers dienen. Die Carrierprüfstation 103 kann Schienenabschnitt aufweisen, entlang dem ein Carrier 1 eines Hängeförderers 101 verfahrbar sein kann. Die Carrierprüfstation 103 kann mindestens eine Überwachungseinheit 2 aufweisen. Die Überwachungseinheit 2 kann derart an oder bei einem Überwachungsabschnitt 202 des Schienenabschnitts angeordnet und dazu eingerichtet sein, einen charakteristischen Wert 10 eines Carriers 1 und/oder eines Überwachungscarriers 1 zu erfassen und/oder in einem Datenspeicher des Carriers 1 und/oder Überwachungscarriers 1 hinterlegte Daten oder charakteristische Werte 10 auszulesen, wenn der Carrier 1 bzw. Überwachungscarrier 1 in dem Überwachungsabschnitt verfahren ist oder wird.

Ist ein Carrier 1 und/oder Überwachungscarrier 1 in dem Schienenabschnitt und/oder dem Überwachungsabschnitt 202 verfahren, so kann damit gemeint sein, dass sich der Carrier 1 und/oder der Überwachungscarrier 1 in dem Schienenabschnitt und/oder dem Überwachungsabschnitt 202 befindet. Damit ist nicht zwingend impliziert, dass sich der Carrier 1 und/oder der Überwachungscarrier 1 in dem Schienenabschnitt und/oder dem Überwachungsabschnitt 202 bewegen muss. Es kann vorgesehen sein, den charakteristischen Wert 10 zu erfassen, wenn sich der Carrier 1 und/oder der Überwachungscarrier 1 in dem Schienenabschnitt und/oder dem Überwachungsabschnitt 202 befindet. Befindet sich der Carrier 1 und/oder der Überwachungscarrier 1 in dem Schienenabschnitt und/oder dem Überwachungsabschnitt 202, so kann der Carrier 1 und/oder der Überwachungscarrier 1 angehalten, abgestoppt und/oder abgebremst sein oder werden. Es kann vorgesehen sein, den charakteristischen Wert 10 zu erfassen, wenn sich der Carrier 1 und/oder der Überwachungscarrier 1 in dem Schienenabschnitt und/oder dem Überwachungsabschnitt 202 angehalten, abgestoppt und/oder abgebremst ist oder wird.

Der Überwachungsabschnitt 202 kann ein Teil des Schienenabschnitts sein. Der Überwachungsabschnitt 202 kann demjenigen Teil des Schienenabschnitts der Carrierprüfstation 103 entsprechend oder zusammenfallen, in, an oder bei dem eine, mehrere oder alle Überwachungseinheiten 2 der Carrierprüfstation 103 einen charakteristischen Wert 10 erfassen können.

Die Carrierprüfstation kann eine Kontrolleinheit 8 haben. Die Kontrolleinheit 8 kann eine Carrierprüfstationskontrolleinheit sein oder aufweisen. Die Kontrolleinheit 8 kann eines, mehrere oder alle der vorstehend beschriebenen Merkmale und Vorteile aufweisen. Die Carrierprüfstationskontrolleinheit kann der Carrierkontrolleinheit ähnlich sein, und/oder einige, mehrere oder alle Merkmale und Vorteil der Carrierkontrolleinheit aufweisen.

Die Carrierprüfstation 103 und/oder die Kontrolleinheit 8 kann eine Kommunikationsschnittstelle 9 aufweisen. Mit der Kommunikationsschnittstelle 9 kann die Carrierprüfstation 103 erfasste charakteristische Werte 10 an eine oder die Kontrolleinheit 8 zu übertragen. Die Kommunikationsschnittstelle 9 kann eine oder die Funkschnittstelle 12 sein oder aufweisen. Carrierprüfstation 103 und Kontrollstation 102 können zum Datenaustausch miteinander verbunden sein, beispielsweise über narrowband-IOT, Bluetooth, WLAN, GSM, Zigbee, LTE, Z-Wave, LoRaWAN, NFC, geeignete low-power wide-area network (LPWAN) Protokolle und/oder geeignete andere drahtlose Protokolle. Es kann vorgesehen sein, dass die Kontrollstation 102 die Carrierprüfstation 103 steuern und/oder regeln kann, oder Steuerbefehle an die Carrierprüfstation 103 senden kann.

Die Überwachungseinheit 2 der Carrierprüfstation 103 kann eine Kamera, einen fotoelektrischen Sensor aufweisen. Die Kamera kann eine optische Kamera sein oder aufweisen. Die optische Kamera kann dazu eingerichtet sein, ein Bild oder Video aufzunehmen, und/oder der charakteristische Wert 10 ein Bild oder ein Video umfassen. Die Kamera kann eine RGBD-Kamera, eine LIDAR-Kamera oder einen LIDAR-Scanner, und/oder Radar-Erfassungseinheit sein oder aufweisen, und/oder der charakteristische Wert 10 Tiefendaten oder Abstandsdaten umfassen. Der fotoelektrische Sensor kann eine Lichtschranke und/oder eine Laserschranke sein, aufweisen oder bilden.

Die Überwachungseinheit 2 der Carrierprüfstation 103 kann einen Transponder und/oder ein Lesegerät sein oder aufweisen. Der Transponder und/oder das Lesegerät kann dazu eingerichtet sein, einen RFID-Chip und/oder RFID-Tag eines Carriers 1. Überwachungscarriers 1 oder einer Tasche 7 auszulesen. Der RFID-Chip und/oder RFID-Tag kann eine eindeutige Identifizierung des Carriers 1, Überwachungscarriers 1 oder einer Tasche 7 ermöglichen. Der RFID-Chip und/oder RFID-Tag kann einen eindeutigen Identifikationscode Carriers 1, Überwachungscarriers 1 oder einer Tasche 7 enthalten oder umfassen. Der Transponder und/oder ein Lesegerät kann dazu eingerichtet sein, über NFC-Daten zu empfangen oder auszutauschen.

Die Überwachungseinheit 2 der Carrierprüfstation 103 kann einen Sensor aufweisen, der ein Magnetfeld, und/oder eine Magnetfeldstärke und/oder Magnetfeldrichtung erfassen kann.

Die Überwachungseinheit 2 der Carrierprüfstation 103 kann einen Sensor aufweisen, der Vibrationen und/oder Schwingungen erfassen kann. Der Sensor kann ein Schwingungssensor sein oder umfassen. Der Sensor kann an oder bei dem Schienenabschnitt und/oder dem Überwachungsabschnitt 202 angeordnet sein. Der Sensor kann z.B. Vibrationen und/oder Schwingungen erfassen, die durch einen durch den Schienenabschnitt und/oder dem Überwachungsabschnitt 202 verfahrenen Carrier 1 hervorgerufen sind oder werden. In einigen Ausführungsformen kann die Überwachungseinheit 2 ein Mikrophon sein oder aufweisen. Das Mikrophon kann Umgebungsgeräusche und/oder durch den Carrier 1 hervorgerufene Geräusche, z.B. Laufgeräusche oder Laufrollengeräusche, erfassen, und/oder durch Vibrationen oder Schwingungen hervorgerufene Geräusche. Es kann vorgesehen sein, basierend auf den erfassten Geräuschen Vibrationen und/oder Schwingungen des Schienenabschnitts und/oder des Überwachungsabschnitts 202 zu bestimmen oder zu ermitteln.

Die Carrierprüfstation 103 kann eine Kontrolleinheit 8 aufweisen. Die Kontrolleinheit 8 kann in einigen Ausführungsformen Daten und charakteristische Werte 10 von einer, mehreren oder allen Sensoren und Überwachungseinheiten 2 der Carrierprüfstation 103 empfangen. Die Kontrolleinheit 8 kann dazu eingerichtet sein, einer, mehreren oder alle Sensoren und Überwachungseinheiten 2 der Carrierprüfstation 103 zu steuern. Weist die Carrierprüfstation 103 eine Bremsvorrichtung auf, so kann die Kontrolleinheit 8 dazu eingerichtet sein, die Bremsvorrichtung zu steuern und/oder zu regeln. Die Kontrolleinheit 8 kann dazu eingerichtet sein, die von den Überwachungseinheiten 2 empfangenen Daten und charakteristischen Werte 10 zu analysieren, auszuwerten, zu bearbeiten, zu modifizieren, und/oder basierend darauf Steuerbefehle, Prognose oder Modelle erstellen. Die Kontrolleinheit 8 kann einen Datenspeicher aufweisen, in dem Daten und/oder charakteristische Werte oder dergleichen hinterlegt sein oder werden können.

Die Kontrolleinheit 8 kann mit der Kontrollstation 102 zum Datenaustausch verbunden sein. Die Kontrolleinheit 8 kann mit der Kontrollstation 102 über die Kommunikationsschnittstelle 9 verbunden sein. Die Kontrolleinheit 8 kann die von den Überwachungseinheiten 2 empfangenen Daten und charakteristischen Werte 10, und/oder die von der Kontrolleinheit 8t basierend darauf erstellten Analysen, Auswertungen, Prognosen, Steuerbefehle, Modelle und/oder modifizierten Daten oder modifizierte charakteristische Werte an die Kontrollstation 102 übermitteln. Die Kontrollstation 102 kann Daten und charakteristischen Werte 10, und/oder die von der Kontrolleinheit 8 basierend darauf erstellten Analysen, Auswertungen, Prognosen, Steuerbefehle, Modelle und/oder modifizierten Daten oder modifizierte charakteristische Werte von der Kontrolleinheit 8 abfragen.

Alternativ oder zusätzlich kann vorgesehen sein, dass die Kontrollstation 102 direkt auf die Sensoren und Überwachungseinheiten 2 der Carrierprüfstation 103, und/oder ggf. die Bremsvorrichtung der Carrierprüfstation 103, zugreifen kann und/oder direkt mit diesen zum Datenaustausch verbunden sein kann. Die Kontrollstation 102 kann in einigen Ausführungsformen Daten und charakteristische Werte 10 von einer, mehreren oder allen Sensoren und Überwachungseinheiten 2 der Carrierprüfstation 103 empfangen. Die Kontrollstation 102 kann dazu eingerichtet sein, einer, mehreren oder alle Sensoren und Überwachungseinheiten 2 der Carrierprüfstation 103 zu steuern. Weist die Carrierprüfstation 103 eine Bremsvorrichtung auf, so kann die Kontrollstation 102 dazu eingerichtet sein, die Bremsvorrichtung zu steuern und/oder zu regeln. Die Kontrollstation 102 kann dazu eingerichtet sein, die von den Überwachungseinheiten 2 empfangenen Daten und charakteristischen Werte 10 zu analysieren, auszuwerten, zu bearbeiten, zu modifizieren, und/oder basierend darauf Steuerbefehle, Prognose oder Modelle erstellen.

Eine erste Überwachungseinheit 2 kann derart angeordnet sein, dass sie einen charakteristischen Wert 10 des Carriers 1 und/oder einer von dem Carrier 1 transportierten Tasche 7 von einer ersten Seite erfassen kann. Eine zweite Überwachungseinheit 2 kann derart angeordnet sein, dass sie einen charakteristischen Wert 10 des Carriers 1 und/oder der Tasche 7 von einer zweiten Seite, die von der ersten Seite verschieden sein kann, erfassen kann.

Alternativ oder zusätzlich kann mindestens eine Überwachungseinheit 2 seitlich an einer Seite des Überwachungsabschnitt 202 angeordnet sein, und mindestens eine weitere Überwachungseinheit 2 der Seite gegenüberliegend angeordnet sein. Es kann vorgesehen sein, dass der Carrier 1 im Überwachungsabschnitt 202 zwischen zwei Überwachungseinheiten 2 verfahrbar sein kann. Die Überwachungseinheiten 2 können beispielsweise derart angeordnet sein, dass sie seitlich eine oder die Laufrollen des Carriers 1, den Körper des Carriers 1, das Kopfstück 5 und/oder die Magnetkupplung 6 des Carriers 1, die Aufnahme 4 des Carriers 1 und/oder die Tasche 7 erfassen können, und/oder einen charakteristische Wert 10 dieser erfassen können.

Es kann vorgesehen sein, dass eine Überwachungseinheit 2 an oder bei einer oberen Seite des Überwachungsabschnitts 202 angeordnet sein kann. Der Carrier 1 kann im Überwachungsabschnitt 202 unterhalb der Überwachungseinheit 2 verfahrbar sein. Die Überwachungseinheit 2 kann beispielsweise derart angeordnet sein, dass sie eine oder die Laufrollen des Carriers 1, den Körper des Carriers 1, das Kopfstück 5 und/oder die Magnetkupplung 6 des Carriers 1, und/oder die Tasche 7 von oben erfassen kann, und/oder einen charakteristische Wert 10 dieser erfassen kann.

Die Überwachungseinheit 2 kann dazu eingerichtet sein, eine Position und/oder Abmessung des Carriers 1 und/oder einer von dem Carrier 1 transportierten Tasche 7 zu erfassen. In einigen Ausführungsformen kann die Überwachungseinheit 2 dazu eine Kamera oder einen fotoelektrischen Sensor aufweisen. Beispielsweise kann der fotoelektrische Sensor eine Lichtschranke oder Laserschranke bilden, und erkennen, wenn ein Carrier 1 oder eine Tasche 7 durch die Lichtschranke oder Laserschranke durchfährt oder sich in deren Bereich befindet. Beispielsweise kann auf einem von einer optischen Kamera aufgenommenen Bild oder Video ein Carrier 1 oder eine Tasche 7, und deren Position, identifiziert sein oder werden. Beispielsweise kann aus mit einer LIDAR-Kamera oder einer RGBD-Kamera erfassten Tiefendaten die Position des Carriers 1 oder der Tasche 7 bestimmt sein oder werden. Beispielsweise kann ein RFID-Chip eines Carriers 1 oder einer Tasche 7 ausgelesen werden, und daraus geschlossen sein oder werden, dass sich der Carriers 1 oder die Tasche 7 bei der Überwachungseinheit 2 befindet.

Die Überwachungseinheit 2 kann dazu eingerichtet sein, eine oder mehrere Laufrollen 3 des Carriers 1 und/oder einen Zustand einer oder mehrerer Laufrollen 3 des Carriers 1 zu erfassen. In einigen Ausführungsformen kann die Überwachungseinheit 2 dazu eine Kamera aufweisen. Beispielsweise kann mit einem von einer optischen Kamera aufgenommenen Bild oder Video ein Zustand einer oder mehrerer Laufrollen 2 bestimmt sein oder werden.

Die Überwachungseinheit 2 dazu eingerichtet sein, eine Magnetfeldstärke und/oder Magnetfeldrichtung eines Koppelstücks 6 und/oder einer Magnetkupplung 6 des Carriers 1 zu erfassen. In einigen Ausführungsformen kann die Überwachungseinheit 2 dazu einen geeigneten Sensor aufweisen. Beispielsweise kann basierend auf dem erfassten Magnetfeld, und/oder dessen Magnetfeldstärke und/oder Magnetfeldrichtung, ein Zustand oder ein Vorliegen einer Magnetkupplung und/oder einer Kopplung zwischen Magnetkupplung und Mitnehmer, bestimmt sein oder werden.

Die Überwachungseinheit 2 kann dazu eingerichtet sein, einen RFID-Chip des Carriers 1 zu erfassen und/oder auszulesen. In einigen Ausführungsformen kann die Überwachungseinheit 2 dazu einen Transponder oder ein geeignetes Lesegerät aufweisen.

Die Überwachungseinheit 2 kann dazu eingerichtet sein, ein an oder bei dem Schienenabschnitt und/oder Überwachungsabschnitt 202 heruntergefallenes Transportgut zu erfassen. Beispielsweise kann das heruntergefallene Transportgut aus einer Tasche 7 eines Carriers 1 herausgefallen sein. Alternativ oder zusätzlich kann die Überwachungseinheit 2 dazu eingerichtet sein, aus einer von dem Carrier 1 transportierten Tasche 7 heraushängende Gegenstände und/oder einen Beladungszustand der Tasche 7 zu erfassen. Beispielsweise kann ein fotoelektrischer Sensor eine Lichtschranke oder Laserschranke bilden, und erkennen, wenn ein Carrier 1 oder eine Tasche 7 durch die Lichtschranke oder Laserschranke durchfährt oder sich in deren Bereich befindet, oder ob sich ein Gegenstand in einem vorgegebenen Bereich, z.B. seitlich von einer Tasche 7, oder unterhalb des Überwachungsabschnitts 202, befindet. Beispielsweise kann mit einem von einer Kamera aufgenommenen Bild, Video und/oder Tiefendaten bestimmt sein oder werden, ob ein an oder bei dem Schienenabschnitt und/oder Überwachungsabschnitt 202 ein Transportgut heruntergefallen ist, und/oder ob ein Gegenstand aus einer von dem Carrier 1 transportierten Tasche 7 heraushängt. Beispielsweise kann mit einem Bild, Video und/oder Tiefendaten ein Beladungszustand der Tasche 7 bestimmt sein oder werden.

Die Überwachungseinheit kann dazu eingerichtet sein, eine Beschleunigung des Carriers 1 und/oder einer von dem Carrier 1 transportierten Tasche 7 zu erfassen. Beispielsweise kann mit mehreren Bildern oder Tiefendaten, einem Video und/oder mehreren Lichtschranken eine Geschwindigkeit und/oder Beschleunigung eines Carriers 1 und/oder einer Tasche 7 bestimmt sein oder werden.

Die Überwachungseinheit 2 kann dazu eingerichtet sein, eine Vibration oder Schwingung des Überwachungsabschnitts 202zu erfassen.

Die Carrierprüfstation 103 und/oder die Überwachungseinheit 2 der Carrierprüfstation 103 kann eine oder mehrere Kameras aufweisen. Die Kamera kann eine Kamera sein, die dazu eingerichtet sein kann, ein Bild, Video oder Tiefendaten eines Carriers 1, eines Überwachungscarriers 1 und/oder einer von dem Carrier 1 transportierten Tasche 7 zu erfassen, wenn der Carrier 1 und/oder Überwachungscarrier 1 in dem Überwachungsabschnitt 202 verfahren ist oder wird. Es kann vorgehen sein, dass eine erste Kamera 2 derart angeordnet sein kann, dass sie ein Bild, Video oder Tiefendaten des Carriers 1, der Tasche 7 und/oder Überwachungscarriers 1 von einer ersten Seite aufnehmen kann. Eine zweite Kamera 2 kann derart angeordnet sein, dass sie ein Bild, Video oder Tiefendaten des Carriers 1, der Tasche 7 und/oder des Überwachungscarriers 1 von einer zweiten Seite, die von der ersten Seite verschieden sein kann, aufnehmen kann, wenn der Carrier 1 und/oder Überwachungscarrier 1 in dem Schienenabschnitt verfahren ist oder wird.

Es kann vorgesehen sein, dass eine Kamera nach unten gerichtet ist, z.B. Richtung Boden, um ein heruntergefallenes Transportgut und/oder ein unter dem Überwachungsabschnitt angeordnetes Netz zu erfassen. Das Netz kann z.B. ein Sicherheitsnetz oder ein Fangnetz für heruntergefallene Transportgüter sein oder aufweisen.

In einigen Ausführungsformen kann eine Überwachungseinheit 2, insbesondere eine Überwachungseinheit 2 einer Überwachungsstation 103 und/oder Carrierprüfstation 103, erfassen, ob Transportgut aus einer Tasche 7 heraushängt. Die Überwachungsstation 103 kann dazu eingerichtet sein, zu überprüfen, ob Transportgut aus von einer einem Carrier 1 durch die Überwachungsstation 103 und/oder entlang des Überwachungsabschnitts 202 transportierten Tasche 7 heraushängt. In einigen Ausführungsformen kann alternativ oder zusätzlich die Kontrollstation 102 dazu eingerichtet sein, zu überprüfen, ob Transportgut aus einer von einem Carrier 1 durch die Überwachungsstation 103 und/oder entlang des Überwachungsabschnitts 202 transportierten Tasche 7 heraushängt. In einigen Ausführungsformen kann die Überwachungsstation 103 und/oder die Kontrollstation 102 dazu eingerichtet sein, zu überprüfen, ob Teile eines durch die Überwachungsstation 103 und/oder entlang des Überwachungsabschnitts 202 verfahrenen Carriers 1 und/oder Überwachungscarriers 1 abgebrochen sind, und/oder ob diese beschädigt sind.

Es kann vorgesehen sein, dass eine Überwachungseinheit 2, insbesondere eine Überwachungseinheit 2 einer Überwachungsstation 103, eine Taschendicke einer von einem Carrier transportierten Tasche 7 messen kann. Die gemessene Taschendicke kann mit einer sich für das transportierte Transportgut minimalen Dicke verglichen sein oder werden.

In einigen Ausführungsformen kann die Carrierprüfstation 103 und/oder Überwachungseinheit 2 dazu eingerichtet sein, einen RFID-Chip eines durch die Carrierprüfstation 103 verfahrenen Carriers 1 und/oder Überwachungscarriers 1 auszulesen. Die Überwachungseinheit 2 kann z.B. ein RFID-Leser sein oder aufweisen. Der RFID-Chip kann eine eindeutige Kennung des Carriers 1 und/oder Überwachungscarriers 1 umfassen. Anhand des RFID-Chips kann z.B. die Position des Carriers 1 und/oder Überwachungscarriers 1 in dem Hängefördersystem 100 bestimmt sein oder werden, beispielsweise von der Carrierprüfstation 103 und/oder der Kontrollstation 102. Anhand des eindeutigen Codes des Carriers 1 und/oder Überwachungscarriers 1 kann ein erfasster charakteristischer Wert 10 einem Carrier 1 und/oder Überwachungscarrier 1 zugeordnet oder mit diesem verknüpft sein oder werden. In einigen Ausführungsformen kann der RFID-Chip Informationen zu einen von einem Carrier 1 transportierten Transportgut, beispielsweise einem in einer Tasche 7 transportierten Transportgut, umfassen.

In einigen Ausführungsformen kann die Carrierprüfstation 103 und/oder die Überwachungseinheit 2 dazu eingerichtet sein, ein Magnetfeld zwischen Carrier 1, und/oder Überwachungscarrier 1, und einem magnetischen Mitnehmer zu erfassen, so dass die Carrierprüfstation 103 und/oder die Kontrollstation 102 eine Stärke der Magnetkupplung bestimmen können. Die Carrierprüfstation 103 und/oder die Kontrollstation 102 kann die entsprechenden Analysen, Untersuchungen oder Bestimmung der Zustände anhand der von der Überwachungseinheit 2 erfassten charakteristischen Werte 10 durchführen.

Der Schienenabschnitt und/oder der Überwachungsabschnitt 202 kann zumindest teilweise und/oder abschnittsweise aus einem durchsichtigen Material bestehen oder ein solches aufweisen. In einigen Ausführungsformen kann der Schienenabschnitt im Bereich der Carrierprüfstation 103 und/oder im Überwachungsabschnitt 202 zumindest teilweise und/oder abschnittsweise aus einem durchsichtigen Material bestehen oder ein solches aufweisen. Es kann vorgesehen sein, dass mindestens eine Überwachungseinheit 2, z.B. eine Kamera, derart angeordnet ist, dass sie auf das durchsichtige Material gerichtet sein kann. Die Überwachungseinheit 2 kann z.B. dazu eingerichtet sein und/oder derart ausgerichtet sein, dass sie die Laufrollen 3 des Carriers 1 und/oder Überwachungscarriers 1 und/oder einen Zustand der Laufrollen 3 des Carriers 1 und/oder Überwachungscarriers 1 erfassen kann, wenn dieser in dem Schienenabschnitt verfahren ist oder wird.

Die Carrierprüfstation 103 kann eine Bremsvorrichtung aufweisen. Die Bremsvorrichtung kann dazu eingerichtet sein, den Carrier 1 in dem Überwachungsabschnitt 202 abzubremsen und/oder zu stoppen. Die Bremsvorrichtung kann an, bei oder im Überwachungsabschnitt 202 angeordnet sein. Die Bremsvorrichtung kann derart angeordnet sein, dass mindestens eine Überwachungseinheit 2 einen charakteristischen Wert 10 eines von der Bremsvorrichtung abgebremsten oder gestoppten Carriers 1 erfassen kann.

Die Bremsvorrichtung kann mindestens einen Stößel aufweisen. Der Stößel kann zwischen einer ersten Position und einer zweiten Position verstellbar sein. Der Stößel kann im Wesentlichen senkrecht zu einer Erstreckungsrichtung des Schienenabschnitts und/oder des Überwachungsabschnitts 202 verstellbar sein. Wenn sich der Stößel in der ersten Position befindet und/oder in die erste Position verstellt ist oder wird, so kann der Stößel einen entlang des Schienenabschnitts und/oder Überwachungsabschnitts 202 geführten Carrier 1 stoppen oder zumindest abbremsen. Beispielsweise kann der Stößel in der ersten Position den Carrier 1 kontaktieren, und so stoppen oder zumindest abbremsen.

Wenn sich der Stößel in der zweiten Position befindet und/oder in die zweite Position verstellt ist oder wird, so kann der Stößel derart relativ zur ersten Position zurückgezogen sein oder werden, dass der Stößel einen entlang des Schienenabschnitts und/oder Überwachungsabschnitts 202 geführten Carrier 1 nicht kontaktieren kann. Wird oder ist der Stößel von der zweiten Position in die erste Position verstellt, so kann ein von dem Stößel in der ersten Position gestoppter und/oder abgebremster Carrier 1 freigegeben werden, und/oder wieder verfahrbar sein oder werden.

Die Bremsvorrichtung kann eine Wippe aufweisen. Die Wippe kann mechanisch mit dem Stößel gekoppelt sein und die dazu eingerichtet sein, den Stößel zwischen der ersten Position und der zweiten Position zu verstellen. Die Bremsvorrichtung kann einen Antrieb zum Verstellen des Stößels und/oder der Wippe aufweisen. Der Antrieb kann z.B. ein Elektromotor sein oder aufweisen. Der Antrieb kann mit der Kontrolleinheit 8 und/oder der Kontrollstation 102 derart verbunden sein, dass Antrieb von der Kontrolleinheit 8und/oder der Kontrollstation 102 steuerbar sein kann.

Es kann vorgesehen sein, dass ein Carrier 1 in dem Überwachungsabschnitt 202 von der Bremsvorrichtung gestoppt und/oder zumindest abgebremst ist oder wird, und eine oder die Überwachungseinheit 2 einen charakteristischen Wert 10 des gestoppten und/oder zumindest abgebremsten Carriers 1 und/oder einer Tasche 7 erfassen kann. Es kann vorgesehen sein, dass der Carrier 1 gestoppt und/oder zumindest abgebremst ist oder wird, bevor ein oder der charakteristische Wert 10 erfasst ist oder wird. Es kann vorgesehen sein, dass der Carrier 1 nach dem Erfassen des charakteristische Wert 10 freigegeben und/oder wieder weiterverfahren ist oder wird.

Es kann vorgesehen sein, dass die Kontrollstation 102 die Carrierprüfstation 103 steuert und/oder eine instruiert, einen oder mehrere charakteristische Werte 10 eines oder mehrerer Carrier 1, Überwachungscarrier 1 und/oder Taschen 7 zu erfassen. Die Kontrollstation 102 kann in einigen Ausführungsformen alternativ oder zusätzlich die Bremsvorrichtung steuern und/oder regeln.

In einigen Ausführungsformen kann die Bremsvorrichtung eine Vereinzelungsvorrichtung sein oder aufweisen, oder der Vereinzelung von Carriern 1 dienen. In einigen Ausführungsformen kann die Carrierprüfstation 103 mit einer Vereinzelungsstation kombiniert sein, und/oder für eine Vereinzelung von Carriern 1 verwendet werden oder dienen.

Die Bremsvorrichtung kann in einigen Ausführungsformen zwei Stößel aufweisen. Die Stößel können mit der Wippe mechanisch gekoppelt sein. Die Stößel können gegenläufig verstellt sein oder werden.

Der Schienenabschnitt und/oder der Überwachungsabschnitt 202 kann eine Gefällestrecke sein oder aufweisen. Es kann vorgesehen sein, dass ein Carrier 1 in dem Schienenabschnitt und/oder der Überwachungsabschnitt 202 aufgrund seiner Gewichtskraft verfahrbar sein kann. Es kann vorgesehen sein, dass ein Carrier 1 in dem Schienenabschnitt und/oder der Überwachungsabschnitt 202 nur aufgrund seiner Gewichtskraft verfahren ist oder wird. In einigen Ausführungsformen kann in dem Schienenabschnitt und/oder dem Überwachungsabschnitt 202 kein Trum angeordnet und/oder vorgesehen sein. In einigen anderen Ausführungsformen kann alternativ oder zusätzlich ein Trum vorgesehen sein. Der Trum kann über einen Mitnehmer mit dem Carrier 1 und/oder Überwachungscarrier 1 gekoppelt sein oder werden. Der Trum kann dazu eingerichtet sein, zumindest abschnittsweise den Carrier 1 und/oder Überwachungscarrier 1 in dem Schienenabschnitt und/oder dem Überwachungsabschnitt 202 zu verfahren und/oder zu bewegen.

Der Hängeförderer 101 und/oder das Hängeförderersystem 100 kann eine (nicht in den Figuren gezeigte) Ausschleusstation aufweisen. Die Ausschleusstation kann dazu eingerichtet sein oder dienen, einen auszuschleusenden Carrier 1 auszuschleusen, und/oder aus dem Hängeförderer 101 und/oder dem Hängeförderersystem 100 zu entfernen. Die Carrierprüfstation 103 kann eine Kontrolleinheit 8 aufweisen, die dazu eingerichtet sein können, die von der Carrierprüfstation 103 erfassten charakteristischen Werte 10 auszuwerten und basierend darauf zu bestimmen, ob ein Carrier 1 ein auszuschleusender Carrier ist. Alternativ oder zusätzlich kann die Kontrollstation 102 dazu eingerichtet sein, die von der Carrierprüfstation 103 erfassten charakteristischen Werte 10 auszuwerten und basierend darauf zu bestimmen, ob ein Carrier 1 ein auszuschleusender Carrier ist.

Ein Verfahren zum Überprüfen eines Carriers 1 eines Hängeförderers 101 kann die Schritte umfassen:
- Verfahren eines Carriers 1 in einen Überwachungsabschnitt 202 einer Carrierprüfstation 103;
- Erfassen eines charakteristischen Werts 10 des Carriers 1 mit einer Überwachungseinheit 2 der Carrierprüfstation 103, und/oder Auslesen eines in einem Datenspeicher des Carriers 1 hinterlegten charakteristischen Werts 10.

Das Verfahren kann mit oder durch eine Carrierprüfstation 103 durchgeführt sein oder werden. Eine Carrierprüfstation 103 kann dazu eingerichtet sein, einen, mehrere oder alle Schritte des Verfahrens durchzuführen.

Es kann auch vorgesehen sein, dass alternativ oder zusätzlich in einem Datenspeicher des Carriers 1 hinterlegte Daten erfasst sind oder werden.

Das Verfahren kann mit einer Carrierprüfstation 103 durchgeführt sein oder werden. Eine Carrierprüfstation 103 kann dazu eingerichtet sein, einen, mehrere oder alle Schritte des Verfahrens durchzuführen.

Der Carrier 1 kann beim Erfassen des charakteristischen Werts 10, und/oder beim Auslesen des charakteristischen Werts 10 oder der Daten, zumindest zeitweise und/oder abschnittsweise angehalten sein oder werden.

Der Carrier 1 kann beim Erfassen des charakteristischen Werts 10 und/oder beim Auslesen des charakteristischen Werts 10 oder der Daten, zumindest zeitweise und/oder abschnittsweise in dem Überwachungsabschnitt 202 verfahren sein oder und/oder werden.

Es kann vorgesehen sein, dass bei dem beim Erfassen und/oder auslesen eine Position und/oder Abmessung des Carriers 1 und/oder einer von dem Carrier 1 transportierten Tasche 7 erfasst werden kann. Alternativ oder zusätzlich kann beim Erfassen und/oder auslesen eine oder mehrere Laufrollen 3 des Carriers 1 und/oder ein Zustand einer oder mehrerer Laufrollen 3 des Carriers 1 erfasst werden. Alternativ oder zusätzlich kann beim Erfassen und/oder auslesen eine Magnetfeldstärke und/oder Magnetfeldrichtung eines Koppelstücks 5 und/oder einer Magnetkupplung 6 des Carriers 1 erfasst werden. Alternativ oder zusätzlich kann beim Erfassen und/oder auslesen ein RFID-Chip des Carriers 1 erfasst und/oder ausgelesen werden. Alternativ oder zusätzlich kann beim Erfassen und/oder auslesen ein an oder bei dem Schienenabschnitt und/oder Überwachungsabschnitt 202 heruntergefallenes Transportgut, bevorzugt ein aus einer Tasche 6 eines Carriers 1 herausgefallenes Transportgut, erfasst werden. Alternativ oder zusätzlich kann vorgesehen sein, dass beim Erfassen und/oder auslesen aus einer von dem Carrier 1 transportierten Tasche 7 heraushängende Gegenstände und/oder ein Beladungszustand der Tasche 7 erfasst werden kann. Alternativ oder zusätzlich kann beim Erfassen und/oder auslesen eine Beschleunigung des Carriers 1 und/oder einer von dem Carrier 1 transportierten Tasche 7 erfasst werden.

Der erfasste und/oder ausgelesene charakteristische Wert 10, und/oder die ausgelesenen Daten, können von einer Kontrolleinheit 8 ausgewertet werden. Es kann in einigen Ausführungsformen vorgesehen sein, dass bei oder nach der Auswertung bestimmt werden kann, ob der Carrier 1 ein auszuschleusender Carrier 1 ist.

Der Carrier 1 und/oder Überwachungscarrier 1 kann dazu eingerichtet sein, entlang des Hängeförderers 101 verfahren zu sein oder werden. Der Carrier 1 und/oder der Überwachungscarrier 1 kann insbesondere entlang einer Überwachungsroute R verfahrbar sein. Die Überwachungsroute R kann einem Abschnitt und/oder Teil des Hängeförderers 101 entsprechen. In einigen Ausführungsformen kann die Überwachungsroute R auch der kompletten Strecke des Hängeförderers 101 entsprechen. Der Überwachungscarrier 1 kann dazu eingerichtet sein, an oder bei einem Überwachungspunkt P und/oder zumindest abschnittsweise oder punktweise in einem Bereich B einen charakteristischen Wert 10 zu erfassen. Der Bereich B kann ein Überwachungsbereich B sein oder aufweisen. Mit Bereich B kann ein Überwachungsbereich B gemeint sein. Der Überwachungscarrier 1 und/oder die Überwachungseinheit 2 kann dazu eingerichtet sein, kontinuierlich, z.B. kontinuierlich in dem Bereich B, einen charakteristischen Wert 10 zu erfassen.

Der Überwachungscarrier 1 kann an den Überwachungspunkt P verfahren sein oder werden, und an dem Überwachungspunkt P einen oder mehrere charakteristische Werte 10 erfassen. Alternativ oder zusätzlich kann der Überwachungscarrier 1 in dem Bereich B verfahren sein oder werden, und in dem Bereich B einen oder mehrere charakteristische Werte 10 erfassen. Es können mehr als ein Überwachungspunkt P und/oder Bereich B vorgesehen sein. Ein Überwachungspunkt P kann in einem Bereich B liegen.

Überwachungspunkt P und/oder Bereich B können in der Überwachungsroute R liegen, und/oder Teil dieser sein. Es können auch mehr als ein Überwachungspunkt P und/oder mehr als ein Bereich B vorgesehen sein. Der Bereich B kann in einigen Ausführungsformen auch eine oder mehrere Funktionseinheiten, Streckenabschnitte oder Teile des Hängeförderers 101 umfassen. Lediglich beispielsweise umfasst der Bereich B bei dem in Figur 5 gezeigten Ausführungsbeispiel die Ladestation 104 und/oder Weiche 108. Damit kann vorgesehen sein, dass der Überwachungscarrier 1 den charakteristischen Wert 10 auch an, in oder bei dem entsprechenden Teil des Hängeförderers und/oder Funktionseinheit, im Beispiel Ladestation 104 und/oder Weiche 108, erfassen kann. Der Überwachungscarrier 1 kann einen oder mehrere charakteristische Wert 10 auch beim Durchfahren eines entsprechenden Teils des Hängeförderers und/oder Funktionseinheit, im Beispiel Ladestation 104 und/oder Weiche 108, erfassen. Der Überwachungscarrier 1 kann einen oder mehrere charakteristische Wert 10 auch beim Durchfahren eines entsprechenden Streckenabschnitts des Hängeförderers erfassen.

In einigen Ausführungsformen kann der Überwachungspunkt P an, in oder bei einem Streckenabschnitt, Teil und/oder Funktionseinheit des Hängeförderers 100 angeordnet sein. Beispielsweise kann, wie in Figur 5 gezeigt, der Überwachungspunkt P an, bei oder in einer Weiche 108 des Hängeförderers 101 angeordnet sein. Einer oder der Überwachungspunkt P kann aber auch entlang der Strecke des Hängeförderers 101 angeordnet sein.

In einigen Ausführungsformen kann ein dynamisches Routing vorgesehen sein. Dabei kann die Überwachungseinheit 2 einen oder mehrere charakteristische Werte 10 im laufenden Betrieb erfassen, z.B. wenn einer oder mehrere Carrier 1 und/oder Überwachungscarrier 1 verfahren sind oder werden, z.B. durch Überwachungspunkt P und/oder Bereich B. In einigen Ausführungsformen kann ein statisches Routing vorgesehen sein. Dabei kann beim Erfassen eines oder mehrerer charakteristischen Werte 10 ein Überwachungscarrier 1, der den oder die entsprechenden charakteristischen Werte 10 erfassen kann, stehenbleiben, z.B. an einem Überwachungspunkt P und/oder in einem Bereich B.

Hat der Überwachungscarrier 1 einen oder mehrere charakteristische Werte 10 erfasst, so kann dieser an die Kontrollstation 102 übermittelt sein oder werden., beispielsweise über Funkverbindung 14 und/oder eine kabelgebundene Verbindung (nicht in den Figuren gezeigt). In einigen Ausführungsformen kann der charakteristische Wert 10 von einer oder der Kontrolleinheit 8, z.B. einer Carrierkontrolleinheit, übermittelt sein oder werden.

Wie beispielhaft in Figur 6 gezeigt kann alternativ oder zusätzlich mindestens eine Funktionseinheit und/oder ein Streckenabschnitt mindestens eine Überwachungseinheit 2 aufweisen. Weist eine Funktionseinheit und/oder ein Streckenabschnitt eine Überwachungseinheit 2 auf, wo kann vorgesehen sein, dass diese auch eine Kontrolleinheit 8 aufweisen kann. Alternativ oder zusätzlich kann eine Überwachungseinheit 2, und in einigen Ausführungsformen auch eine Kontrolleinheit 8, an, bei oder in einer Funktionseinheit und/oder einem Streckenabschnitt angeordnet sein. Die Überwachungseinheit 2 kann dazu eingerichtet sein, einen charakteristischen Wert 10 der entsprechenden Funktionseinheit und/oder des Streckenabschnitts, und/oder eine vorbeifahrenden oder sich in der Nähe befindlichen Carriers oder Überwachungscarriers 1 erfassen. Eine an, in oder bei einem Streckenabschnitt angeordnete Überwachungseinheit 2 kann Teil einer Überwachungsstation 103 sein. Eine Überwachungsstation 103 kann eine an, in oder bei einem Streckenabschnitt angeordnete Überwachungseinheit 2 aufweisen oder sein.

Hat eine Überwachungseinheit 2 einer Funktionseinheit und/oder eines Streckenabschnitts, und/oder eine an, bei oder in einer Funktionseinheit und/oder einem Streckenabschnitt angeordnete Überwachungseinheit 2 einen oder mehrere charakteristische Werte 10 erfasst, so kann dieser an die Kontrollstation 102 übermittelt sein oder werden., beispielsweise über Funkverbindung 14 und/oder eine kabelgebundene Verbindung 15. In einigen Ausführungsformen kann der charakteristische Wert 10 von einer oder der Kontrolleinheit 8 der Funktionseinheit und/oder des Streckenabschnitts, und/oder eine an, bei oder in der Funktionseinheit und/oder dem Streckenabschnitt angeordnete Kontrolleinheit 8, übermittelt sein oder werden.

Die Kontrollstation 102 kann eine Computereinheit 116 aufweisen. Die Kontrollstation 102 und/oder die Computereinheit 116 kann dazu eingerichtet sein, die Überwachungsroute R, Überwachungspunkte P und/oder Bereiche B vorzugeben und/oder zu bestimmen. Kontrollstation 102 und/oder Computereinheit 116 kann dazu eingerichtet sein, Überwachungscarrier 1 und/oder Hängeförderers 101 derart anzusteuern, dass der Überwachungscarrier 1 entsprechend entlang der Überwachungsroute R verfahren ist oder wird, so dass eine oder mehrere charakteristische Werte 10 von der Überwachungseinheit 2 des Überwachungscarriers 1 erfasst sind oder werden können. Alternativ oder zusätzlich kann Kontrollstation 102 und/oder Computereinheit 116 dazu eingerichtet sein, Überwachungsstation 103 und/oder eine an, bei oder in Schiene, Schienenabschnitt bzw. Streckenabschnitt und/oder einer Funktionseinheit fest angeordnete Überwachungseinheit 2 derart anzusteuern, dass diese einen oder mehrere charakteristische Werte 10 erfassen kann.

Zum oder beim Überwachen eines Hängeförderers mit einem Überwachungscarrier 1 kann zunächst eine Überwachungsroute R durch die Kontrollstation 102 bestimmt sein oder werden. Es kann vorgesehen sein, dass die Kontrollstation 102 einen oder mehrere Bereiche B und/oder Überwachungspunkte P bestimmen kann. Der Überwachungscarrier 1 kann dann ggf. zu der Überwachungsroute R und verfahren sein oder werden, und/oder entlang der Überwachungsroute R verfahren sein oder werden. Es kann vorgesehen sein, den Überwachungscarrier 1 zu oder in dem Bereich B, und/oder Überwachungspunkt P, zu verfahren. Einer oder mehrere charakteristische Werte 10 kann dann mit der Überwachungseinheit 2 des Überwachungscarriers 1 an dem Überwachungspunkt P und/oder an oder in dem Bereich B erfasst sein oder werden. Der erfasste charakteristische Wert 10 kann in einem Datenspeicher 11 des Überwachungscarriers 1 hinterlegt werden, und/oder über eine Kommunikationsschnittstelle 9 des Überwachungscarriers 1 an die Kontrollstation 102 übermittelt werden.

Alternativ oder zusätzlich kann eine (in einigen Ausführungsformen stationäre) Überwachungseinheit 2 und/oder eine Überwachungsstation 103 an, bei oder im dem Hängeförderer vorgesehen sein. Ein Carrier 1 und/oder Überwachungscarrier 1 kann an oder in einem Bereich B und/oder Überwachungspunkt P, der von der Überwachungseinheit 2 und/oder Überwachungsstation 103 erfassbar ist, verfahren sein oder werden, in einigen Ausführungsformen auf Veranlassung oder gesteuert durch die Kontrollstation 102. Einer oder mehrere charakteristische Werte 10 kann dann mit der Überwachungseinheit 2 (an, bei oder in dem Hängeförderer) und/oder Überwachungsstation 103 des Überwachungscarriers 1 erfasst sein oder werden. Der erfasste charakteristische Wert 10 kann in einem Datenspeicher einer Kontrolleinheit 8 und/oder der Überwachungsstation 103 hinterlegt werden, und/oder über eine Kommunikationsschnittstelle 9 des Überwachungscarriers 1 an die Kontrollstation 102 übermittelt werden.

Die Bestimmung der Überwachungsroute R, des Überwachungsbereichs B und/oder des Überwachungspunkts P kann z.B. auf Grundlage eines aktuellen und/oder prognostizierten Betriebszustands erfolgen. Ein Betriebszustand kann z.B. Informationen, Daten oder Werte bezüglich eines Durchsatzes, Anzahl an Fehlern, oder dergleichen, umfassen. Es kann vorgesehen sein, Daten in bestimmten Betriebszuständen des Hängeförderers 101, und/oder an bestimmten "Points of interest", bzw. interessanten, wichtigen oder kritischen Punkten des Hängeförderers 101, entlang des Hängeförderers 101 und/oder dessen Funktionseinheiten, Komponenten und/oder Stationen, zu sammeln und/oder zu erfassen.

Beim oder zum Erfassen des charakteristischen Werts 10 kann der Carrier und/oder Überwachungscarrier 1 abgebremst und/oder angehalten sein oder werden.

Es kann vorgesehen sein, dass nach einem Erfassen eines charakteristischen Werts 10 an oder in einem Bereich B und/oder Überwachungspunkt P zu einem späteren Zeitpunkt nochmals und/oder wiederholt ein weiterer charakteristischer Wert 10, z.B. dieselbe Größe, erfasst wird. Damit können zeitliche Verläufe des charakteristischen Werts bestimmt sein oder werden. In einigen Ausführungsformen kann periodisch einer oder mehrere charakteristischer Wert 10 erfasst sein oder werden.

In einigen Ausführungsformen kann die Kontrollstation 102 die Überwachungsroute R, Bereiche B und/oder Überwachungspunkte P variieren oder ändern, beispielsweise in Abhängigkeit von vorgegebenen Regeln oder basierend auf Steuerbefehlen. Die Überwachungsroute R, Überwachungsbereich B und/oder der Überwachungspunkte P kann periodisch oder wiederholt geändert sein oder werden. Es kann aber auch vorgesehen sein, dass bei mindestens einem weiteren und/oder wiederholten Erfassen eines charakteristischen Werts 10 die von der Kontrollstation 102 bestimmte Überwachungsroute R, Bereich B und/oder der Überwachungspunkt P unverändert bleibt.

Die Kontrollstation kann dazu eingerichtet sein, basierend auf einem oder mehreren erfassten charakteristischen Werte eine Analyse von Vibrationen oder Schwingungen, bevorzugt des Hängeförderers oder einer Funktionseinheit des Hängeförderers durchzuführen. Die Kontrollstation kann dazu eingerichtet sein, die Analyse unter Berücksichtigung von einer oder der Überwachungseinheit 2 des Überwachungscarriers 1 erfassten charakteristischen Werte 10, z.B. gemessenen Beschleunigungen, durchzuführen. Alternativ oder zusätzlich die Analyse unter Berücksichtigung von einer oder der an dem Hängeförderer 101 angeordnete Überwachungseinheit 2 und/oder einer Überwachungsstation 103 erfassten charakteristischen Werte 10 durchzuführen.

Die Kontrollstation 102 kann dazu eingerichtet sein, basierend auf dem erfassten charakteristischen Wert 10 einen Status des Hängeförderers 101 und/oder einer Funktionseinheit des Hängeförderers 101 zu bestimmen. Der Status kann einem oder dem Betriebszustand entsprechen. Alternativ oder zusätzlich kann die Kontrollstation 102 eine Vorhersage eines Ausfalls, Anomalie, und/oder Wartung des Hängeförderers 101 oder eines Teils des Hängeförderers 101, z.B. einer Funktionseinheit, durchführen. Es kann vorgesehen sein, dass die Kontrollstation 102 einen Betriebszustand, Systemparameter, und/oder Umgebungsparameterdaten wie z.B. Temperatur, Luftfeuchtigkeit, Luftdruck und dergleichen, bei der Vorhersage eines Ausfalls, einer Anomalie oder einer Wartung berücksichtigen kann. Die Kontrollstation 102 kann basierend auf der Vorhersage Instandhaltungsmaßnahmen definieren, bestimmen oder ermitteln.

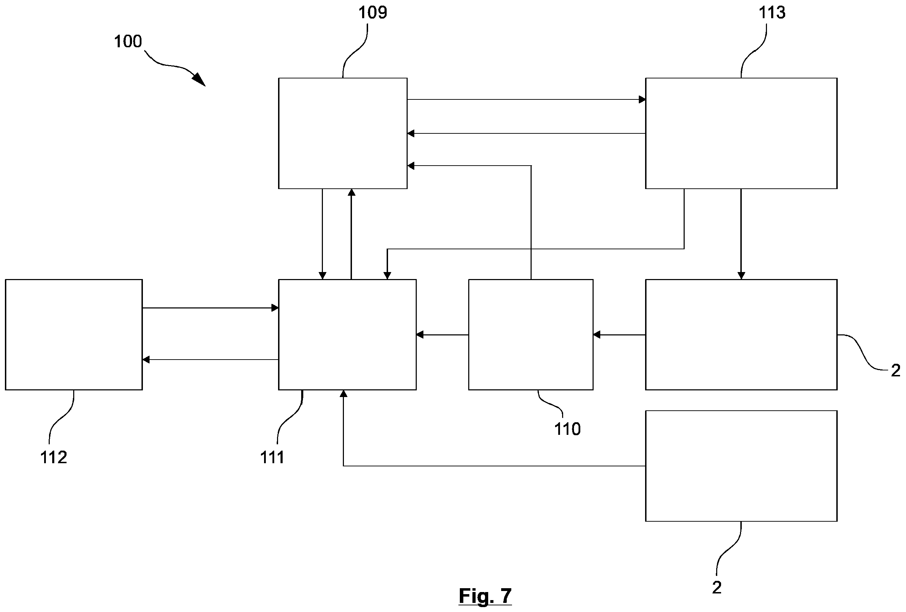

Figur 7 zeigt ein Ausführungsbeispiel eines Hängeförderersystems 100. Das Hängeförderersystem kann eines, mehrere oder alle der vorstehend und/oder nachfolgend beschriebenen oder offenbarten Merkmale und/Vorteile aufweisen. Das Hängeförderersystem 100 und/oder das Überwachungssystem kann einen Server 109 aufweisen. Das Hängeförderersystem 100 und/oder das Überwachungssystem kann ein Gateway 110 aufweisen. Das Hängeförderersystem 100 und/oder das Überwachungssystem kann ein Human-machine-Interface 111 aufweisen. Das Gateway 110 kann dazu eingerichtet sein, Daten von einer Überwachungseinheit 2 und/oder Kontrolleinheit 8 zu empfangen und/oder an eine Überwachungseinheit 2 und/oder Kontrolleinheit 8 zu senden. Das Gateway 110 kann dazu eingerichtet sein, Daten von Server 109 zu empfangen und/oder an Server 109 zu senden. Das Gateway 110 kann dazu eingerichtet sein, Daten von Human-machine-Interface 111 zu empfangen und/oder an Human-machine-Interface 111 zu senden. Das Gateway 110 kann ein IoT-Gateway sein oder aufweisen.

Das Human-machine-Interface 111 kann einen Monitor, einen Bildschirm und/oder einen Lautsprecher aufweisen. Das Human-machine-Interface 111 kann dazu eingerichtet sein, Informationen und Daten, z.B. Zustände oder Zustandsprofile oder Warnungen, auszugeben, beispielsweise an einen Bediener 112 oder einen Benutzer. Beispielsweise kann das Human-machine-Interface 111 Informationen und Daten anzeigen und/oder akustische Signale, z.B. einen Signalton oder Sätze, ausgeben. Das Human-machine-Interface 111 kann dazu eingerichtet sein, Steuerbefehle von dem Bediener 112 oder Benutzer zu empfangen. Die Steuerbefehle können dann z.B. an Server 108, Gateway 110 und/oder Computereinheit 116 übermittelt sein oder werden.

Eine Benutzerschnittstelle kann das Human-Machine-Interface 111 aufweisen und/oder sein. Das Human-Machine-Interface 111 kann eine Benutzerschnittstelle sein oder aufweisen. Die Benutzerschnittstelle und/oder das Human-Machine-Interface 111 kann ein Display aufweisen. Die Benutzerschnittstelle und/oder das Human-Machine-Interface 111 kann z.B. einen Bildschirm mit Eingabemöglichkeit, z.B. per Touch und/oder Tastatur, aufweisen.

In einigen Ausführungsformen kann mit "Benutzerschnittstelle" und/oder "Human-Machine-Interface" jedwede Vorrichtung, Anordnung, System, und/oder Software gemeint sein, mittels der ein Benutzer mit dem System und/oder der Kontrollstation kommunizieren kann, beispielsweise Informationen erhalten und/oder Steuerbefehle eingeben oder übermitteln kann. In einigen Ausführungsforen kann ein Kontrollraum vorgesehen sein, in dem eine Benutzerschnittstelle vorgesehen und/oder angeordnet sein kann, beispielsweise ein Bildschirm und Eingabevorrichtung.

In einigen Ausführungsformen kann alternativ oder zusätzlich mit "Human-Machine-Interface" eine Steuerung an einer Maschine, z.B. eine Steuerkonsole oder dergleichen, gemeint sein.

In einigen Ausführungsformen kann eine App vorgesehen sein, und das Human-machine-Interface 111 die App umfassen. Die App kann beispielsweise auf einem mobilen Gerät, beispielsweise einem Smartphone, Tablet, Laptop oder dergleichen, installiert sein und/oder laufen, so dass der Bediener oder Benutzer von dem Human-machine-Interface 111 ausgegebenen Daten, Informationen oder Warnungen auf oder mittels des mobilen Geräts erhalten kann. Die App kann dazu eingerichtet sein, die Steuerbefehle von dem Bediener oder Benutzer zu erhalten, und an z.B. Server 108, Gateway 110 und/oder Computereinheit 116 zu übermitteln. Die App kann eine graphische Benutzeroberfläche (GUI) umfassen, die auf dem mobilen Gerät angezeigt sein oder werden kann.

In einigen Ausführungsformen kann die Kontrollstation 102 das Gateway 110 aufweisen. In einigen anderen Ausführungsformen kann die Kontrollstation 102 das Gateway 110 nicht aufweisen, aber mit diesem zum Datenaustausch verbunden sein. In einigen Ausführungsformen kann die Kontrollstation 102 das Human-machine-Interface 111 aufweisen.

Der Server 109 kann dazu eingerichtet sein, Daten an Human-machine-Interface 111 zu schicken und/oder Daten von diesem zu empfangen. Der Server 109 kann dazu eingerichtet sein, Daten an Kontrollstation 102 zu schicken und/oder Daten von dieser zu empfangen. Der Server 109 kann beispielsweise ein Cloud-Server sein oder aufweisen.

Ein externes Gerät 113 kann mit dem Server 109, dem Human-machine-Interface 111 und/oder der Überwachungseinheit 2 und/oder Kontrolleinheit 8 zum Datenaustausch verbunden sein. Die Verbindung kann eine gesicherte Verbindung sein oder aufweisen.

In einigen Ausführungsformen kann vorgesehen sein, dass die charakteristischen Werte 10 an den Server 109 übermittelt und dort gespeichert und/oder analysiert werden können. Ist der Server 109 z.B. ein Cloudserver, so kann dieser einfach und unkompliziert skaliert sein oder werden. Alternativ oder zusätzlich kann vorgesehen sein, dass die charakteristischen Werte 10 in einem ggf. lokalen Datenspeicher und/oder einer ggf. lokalen Datenbank 114 der Kontrollstation 102 hinterlegt sind oder werden. Es kann vorgesehen sein, die charakteristischen Werte 10 mit einer Computereinheit 116 der Kontrollstation 102 ggf. lokal zu untersuchen, verarbeiten und/oder zu analysieren. In einigen Ausführungsformen kann vorgesehen sein, dass Server 109, Kontrollstation 102 und/oder Computereinheit 116 mögliche Ausfälle und/oder Anomalien von Komponenten und/oder Maschinen des Hängeförderersystems 100 und/oder Hängeförderers 101, beispielsweise von Funktionseinheiten oder Komponenten bzw. Teile dieser, frühzeitig erkennen kann. Dazu kann beispielsweise ein Vergleich zwischen Betriebsparametern (Ist-Werten) und Soll-Betriebsparameters (Soll-Werten) stattfinden, Daten, Betriebszustände, Parameter anderer Hängeförderer einfließen, Umgebungsdaten berücksichtigt werden, und/oder basierend auf erfassten charakteristischen Werten 10, oder damit bestimmten Zuständen und/oder Zustandsprofilen erfolgen. In einigen Ausführungsformen kann eine Warnmeldung mit dem Human-machine-Interface 111 ausgegeben werden, z.B. optisch, beispielsweise angezeigt, und/oder akustisch.

Es kann vorgesehen sein, dass das externe Gerät 113 auf Server 109, Human-machine-Interface 111 und/oder Überwachungseinheit 2 und/oder Kontrolleinheit 8, und/oder hinterlegte charakteristische Werte 10 und/oder Analysen, Untersuchungen und/oder Zustände oder Zustandsprofile dieser, direkt zugreifen kann, in einigen Ausführungsformen über ein VPN und/oder nach Identifizierung des externen Geräts 113. Beispielsweise kann die Überwachungseinheit 2 dazu mit dem Gateway 110 verbunden sein. In einigen Ausführungsformen kann durch externes Gerät 113 eine Fernwartung erfolgen. In einigen Ausführungsformen kann durch externes Gerät 113 ein Steuerbefehl an die Kontrollstation 102 und/oder Server 109 übermittelt sein oder werden. Die Kontrollstation 102 kann dazu eingerichtet sein, den Hängeförderer 100, Überwachungscarrier 1, Funktionseinheiten des Hängeförderers 100, und/oder eine oder mehrere Überwachungseinheiten 2 basierend auf dem empfangenen Steuerbefehl anzusteuern. In einigen Ausführungsformen können von dem externen Gerät 113 übermittelte Anweisungen, Informationen, Handlungsempfehlungen oder dergleichen von dem Human-machine-Interface 111 ausgegeben werden. In einigen Ausführungsformen kann ein Benutzer 112 oder Bediener über Human-machine-Interface 111 mit dem externen Gerät 113 und/oder einem das externe Gerät bedienenden Benutzer oder Bediener kommunizieren. Damit kann eine Fernwartung ermöglicht sein. Dadurch, dass das externe Gerät 113 auf die charakteristischen Werte 10, und/oder die Analysen, Untersuchungen, Zustände, Zustandsprofile und dergleichen zugreifen kann, können kostenintensive Vor-Ort-Einsätze vermieden oder zumindest reduziert sein oder werden.

In einigen Ausführungsformen kann Kontrollstation 102, Computereinheit 116, Server 109 und/oder externes Gerät 113 einen Ausfall oder eine Anomalie oder mehrerer Komponenten und/oder Maschinen des Hängeförderersystems 100 und/oder Hängeförderers 101, beispielsweise von Funktionseinheiten oder Komponenten bzw. Teile dieser, erkennen. Ist ein Ausfall oder eine Anomalie erkannt, so kann vorgesehen sein, dass eine Lösung zur Beseitigung des zugrunde liegenden Fehlers durch Kontrollstation 102, Computereinheit 116, Server 109 und/oder externes Gerät 113 bestimmt werden kann. Die Lösung kann über Human-machine-Interface 111 ausgegeben und/oder kommuniziert sein oder werden. Es kann auch vorgesehen sein, die Lösung und/oder eine Warnung über eine Hotline, per E-Mail, SMS oder dergleichen an den Benutzer oder Bediener zu kommunizieren.

In einigen Ausführungsformen Kontrollstation 102, Computereinheit 116, Server 109 und/oder externes Gerät 113 Schwachstellen des Hängeförderersystems 100 und/oder des Hängeförderers 101 detektieren und/oder ermitteln. In einigen Ausführungsformen können falsch konfigurierte Betriebsparameter identifiziert werden, die zu Ausfällen führen können. Ausführungsformen Kontrollstation 102, Computereinheit 116, Server 109 und/oder externes Gerät 113 können dazu eingerichtet sein, identifizierte falsch konfigurierte Betriebsparameter anzupassen, um Ausfälle zu vermeiden und/oder zumindest zu reduzieren.

In einigen Ausführungsformen kann Kontrollstation 102, Computereinheit 116, Server 109 und/oder externes Gerät 113 eine Vorhersage bezüglich eines Ausfalls, Anomalie oder Wartung einer oder mehrerer Komponenten und/oder Maschinen des Hängeförderersystems 100 und/oder Hängeförderers 101, beispielsweise von Funktionseinheiten oder Komponenten bzw. Teile dieser, treffen, und/oder einen Wartungszeitpunkt bestimmen. Die Vorhersage einer Wartung und/oder die Bestimmung eines Wartungszeitpunkts kann eine Vorhersage bezüglich benötigter Ersatzteile und/oder Werkzeuge umfassen. Die Vorhersage des Ausfalls, Anomalie oder Wartung und/oder die Bestimmung des Wartungszeitpunkts kann anhand eines oder mehrerer charakteristischer Werte 10, und/oder darauf basierender Analysen, Untersuchungen, Zustandsbestimmungen und/oder Zustandsprofilen erfolgen. Damit kann eine vorausschauende Wartung ermöglicht sein oder werden, so dass allgemein Ausfälle des Hängeförderersystems 100 und/oder des Hängeförderers 101 reduziert sein oder werden können.

In einigen Ausführungsformen können die Analysen, Untersuchungen, Zustandsbestimmungen und/oder Zustandsprofilen, die Vorhersage des Ausfalls, Anomalie oder Wartung und/oder die Bestimmung des Wartungszeitpunkts mit einem maschinellen Lernen, beispielsweise einer künstlichen Intelligenz, Deep Learning, Support Vector Machine oder dergleichen, erfolgen. In einigen Ausführungsformen können die erfassten charakteristischen Werte 10 auch zur Verbesserung der Steuerung des Hängeförderers verwendet werden, beispielsweise um Steuerprogramme oder Algorithmen zu verbessern. Das Training der entsprechenden Modelle kann z.B. in der Cloud stattfinden. Die trainierten Modelle können "vor Ort" eingesetzt sein oder werden.

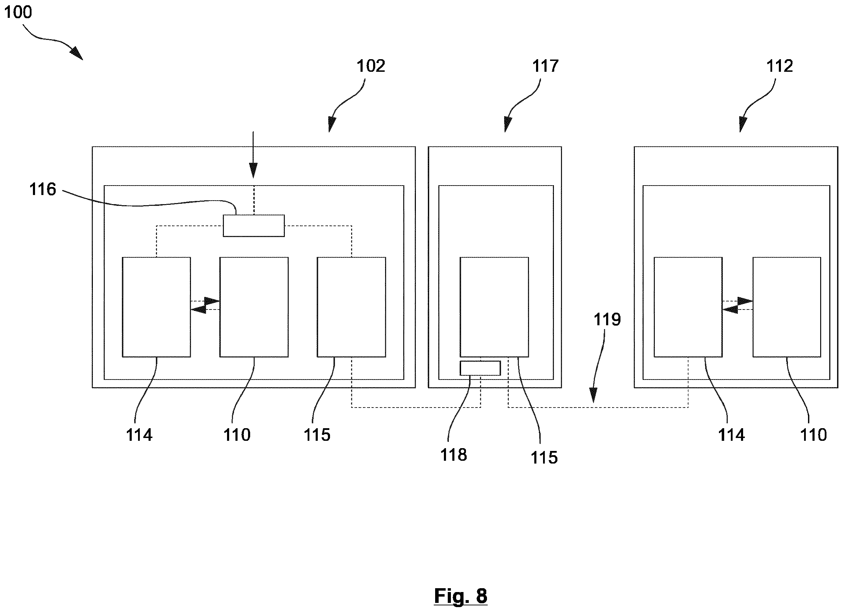

Figur 8 zeigt eine beispielhafte Ausführungsform eines Hängeförderersystems 100. Das Hängeförderersystem kann eines, mehrere oder alle der vorstehend und/oder nachfolgend beschriebenen oder offenbarten Merkmale und/Vorteile aufweisen. Die Kontrollstation 102 kann dazu eingerichtet sein, charakteristische Werte 10 zu empfangen. Die charakteristischen Werte 10 können in einem Datenspeicher und/oder einer Datenbank 114 hinterlegt werden. Kontrollstation 102 kann einen oder den Datenspeicher und/oder Datenbank 114 aufweisen. Die Kontrollstation 102 kann eine Computereinheit 116 aufweisen, mit der die Kontrollstation 102 die charakteristischen Werte 10, z.B. empfangene und/oder hinterlegte charakteristische Werte 10, verarbeiten, modifizieren, analysieren oder dergleichen kann. Die Computereinheit 116 und/oder die Kontrollstation 102 kann dazu eingerichtet sein, basierend auf einem, mehreren oder allen empfangenen und/oder hinterlegten charakteristischen Werte 10 eine oder mehrere Log-Nachrichten 115 zu erstellen. In einigen Ausführungsformen kann die Log-Nachricht eines oder mehrere Zustände, Zustandsprofile, Wartungszeitpunkte, Ausfälle und/oder Anomalien, Vorhersagen, Lösungen von Problemen, oder dergleichen umfassen. Die Log-Nachricht 115 kann über eine Verbindung 118 an einen Log-Server 117 übermittelt werden. Die Verbindung 118 kann eine LAN-Verbindung (local area network) sein oder aufweisen. Die Verbindung 118 kann drahtlos oder kabelgebunden sein. Die Verbindung 118 kann eine gesicherte Verbindung sein oder aufweisen. Die Log-Nachricht kann auf dem Log-Server 117 hinterlegt sein oder werden. In einigen Ausführungsformen kann der Server 109 der Log-Server 117 sein oder aufweisen, und/oder als solcher dienen. Über eine Verbindung 119 kann ein oder das externe Gerät 113 auf den Log-Server 117 und ggf. darauf hinterlegte Log-Nachricht 115 zugreifen. Die Verbindung 119 kann eine LAN-Verbindung (local area network) oder eine WAN-Verbindung (wide area network) sein oder aufweisen. Die Verbindung 119 kann drahtlos oder kabelgebunden sein. Die Verbindung 119 kann eine gesicherte Verbindung sein oder aufweisen.

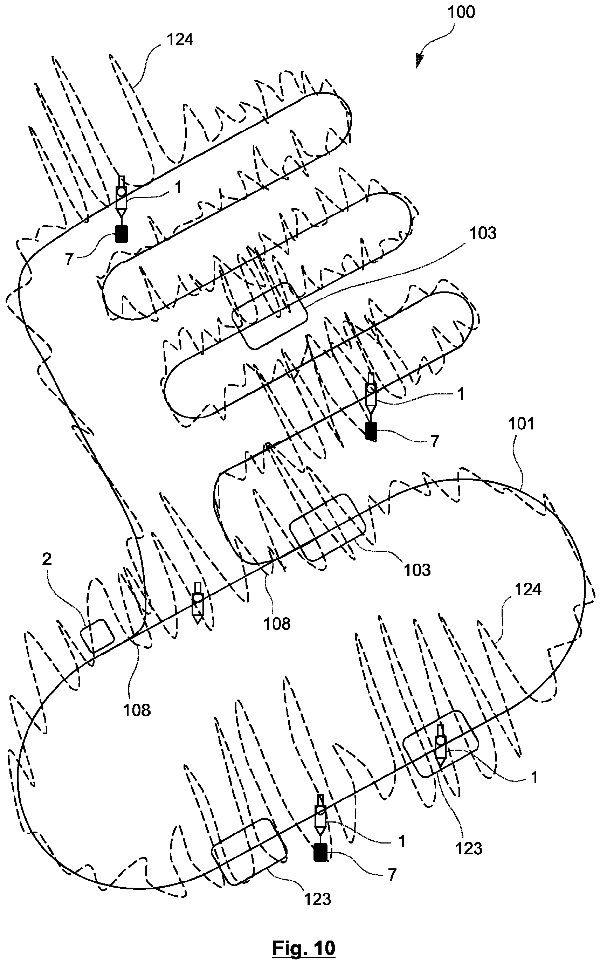

Figur 10 zeigt beispielhaft Schwingungen 124 in einem Hängeförderersystem 100 und/oder einem Hängeförderer 101. Die Schwingungen 124 können z.B. akustische Schwingungen, akustische Signale und/oder Geräusche sein oder aufweisen. Die Schwingungen 124 können beispielsweise Vibrationen sein oder umfassen, z.B. Vibrationen von Schienenabschnitten, Funktionseinheiten 123, Weichen 108, Überwachungsstationen 103, Carrier 1 und/oder Überwachungscarrier 1. Die Schwingungen 124 und/oder Vibrationen können z.B. aufgrund der Bewegung der Carrier 1, der Überwachungscarrier 1, eines Trums des Hängeförderers 1, und/oder von den Funktionseinheiten 123 des Hängeförderers hervorgerufen sein oder werden. Die Amplitude und/oder Frequenz der Schwingungen 124 und/oder Vibrationen können lokal, oder zumindest abschnittsweise, variieren. Die Amplitude und/oder Frequenz der Schwingungen 124 und/oder Vibrationen können von dem Betriebszustand des Hängeförderersystems 100, des Hängeförderers 100, der Funktionseinheiten 123 abhängen. Die aufgrund der Bewegung der Carrier 1, der Überwachungscarrier 1, eines Trums des Hängeförderers 1, und/oder von den Funktionseinheiten 123 des Hängeförderers hervorgerufenen Schwingungen 124 oder Vibrationen können sich überlagern und/oder zumindest teilweise gegenseitig verstärken oder auslöschen, je nach Frequenz und/oder Amplituden der jeweiligen Schwingungen 124 oder Vibrationen. Beispielsweise kann sich die Schwingung 123 und/oder Vibration, in, an oder bei einer Funktionseinheit 123 ändern und/oder verändert sein, wenn ein Carrier 1 und/oder ein Überwachungscarrier 1 an, in oder bei der Funktionseinheit 123 verfahren ist oder wird, und/oder wenn sich der Betriebszustand der Funktionseinheit 123 ändert. Die Schwingungen 124 und/oder Vibrationen können stationär erfasst sein oder werden, beispielsweise durch eine Überwachungsstation 103 und/oder eine an, in oder bei einem Schienenabschnitt angeordnete Überwachungseinheit 2. Alternativ oder zusätzlich können die Schwingungen 124 und/oder Vibrationen dynamisch, flexibel und/oder mobil erfasst sein oder werden, beispielsweise mittels einem oder mehreren Überwachungscarriern 1.

Es kann vorgesehen sein, dass ein Spektrum einer erfassten Schwingung 124 und/oder Vibration untersucht, berechnet, ermittelt und/oder bestimmt wird, und/oder eine Spektralanalyse einer erfassten Schwingung 124 und/oder Vibration durchgeführt ist oder wird. Dazu kann ein geeigneter Algorithmus verwendet sein oder werden, beispielsweise mittels Fourier-Transformation, Fast-Fourier Transformation (FFT), Wavelets, discrete cosinus transformation (DCT) oder anderen geeigneten Transformationen.

Die Schwingung 124 und/oder Vibration kann von dem Betriebszustand und/oder einem Wartungszustand der Funktionseinheit 123 abhängen. Damit kann durch Analyse der Schwingung 124 und/oder Vibration ein Betriebszustand und/oder Wartungszustand ermittelt sein oder werden, beispielsweise durch Vergleich mit bekannten Betriebszuständen und/oder Wartungszuständen. Die Schwingung 124 und/oder Vibration kann auch von einer Geschwindigkeit, Beschleunigung, und/oder Beladungszustand eines Carriers 1 und/oder eines Überwachungsgscarriers 1 abhängen. Es kann beispielsweise vorgesehen sein, die Geschwindigkeit, Beschleunigung, und/oder Beladungszustand eines Carriers 1 und/oder eines Überwachungsgscarriers 1 zu variieren, und die sich daraus ergebenden Änderungen der Schwingung 124 und/oder Vibration zu untersuchen und/oder zu bestimmen. Es kann vorgesehen sein, ein Betriebszustand und/oder Wartungszustand aus den sich ergebenden Änderungen zu bestimmen.

Es kann vorgesehen sein, dass beim Erfassen der Schwingung 124 der Überwachungscarrier 1 mehrmals und/oder wiederholt entlang der Überwachungsroute R und/oder zu dem Überwachungspunkt P verfahren ist oder wird, und mehrmals eine Schwingung 124 erfasst wird. Beim mehrmaligen und/oder wiederholten Verfahren des Überwachungscarriers 1 entlang der Überwachungsroute R und/oder zu dem Überwachungspunkt P kann zumindest abschnittsweise oder zeitweise eine Geschwindigkeit, Beschleunigung und/oder Beladung des Überwachungscarriers 1 variiert sein oder werden.

Es kann vorgesehen sein, dass mehrmals eine Schwingung 124 erfasst werden kann, wobei eine erste Schwingung 124 an einem ersten Überwachungspunkt P und eine zweite Schwingung 124 an einen zweiten, von dem ersten Überwachungspunkt P verschiedenen Überwachungspunkt erfasst sein oder werden kann.

Alternativ oder zusätzlich kann der Betriebszustand einer Funktionseinheit 123 des Hängeförderers 101 bei oder vor dem Erfassen der Schwingung 124 variiert sein oder werden.

Alternativ oder zusätzlich kann bei dem Verfahren des Überwachungscarriers 1 und/oder der Carriers 1 entlang der Überwachungsroute R und/oder im Überwachungsbereich B und/oder beim Erfassen der Schwingung 124 zumindest abschnittsweise und/oder zeitweise eine Geschwindigkeit und/oder Beschleunigung des Überwachungscarriers 1 und/oder des Carriers 1 variiert sein oder werden.

Alternativ oder zusätzlich kann bei dem Verfahren des Überwachungscarriers 1 und/oder des Carriers 1 und/oder beim Erfassen der Schwingung 124 der Überwachungscarrier 1 und/oder der Carrier 1 mehrmals und/oder wiederholt entlang der Überwachungsroute R und/oder im Überwachungsbereich B verfahren sein oder werden.

Alternativ oder zusätzlich können zum Erfassen der Schwingung 124 mindestens zwei Carrier 1 mit unterschiedlicher Beladung entlang der Überwachungsroute R und/oder im Überwachungsbereich B verfahren sein oder werden.

Es kann vorgesehen sein, die Schwingungsanalyse, und/oder die Schwingungen 124 und/oder Vibrationen einem Benutzer oder Bediener anzuzeigen, beispielsweise auf einem Bildschirm oder Monitor eines Human-Machine-Interface 111 und/oder über eine App oder ein Dashboard. In einigen Ausführungsformen kann eine der Figur 10 entsprechende Ansicht dargestellt sein oder werden. Beispielsweise kann das Hängeförderersystem 100 und/oder der Hängeförderer 101 dargestellt sein oder werden, und die Schwingungen 124 und/oder Vibrationen diesen überlagert. Es können Echtzeitdaten angezeigt und/oder erfasst sein oder werden.

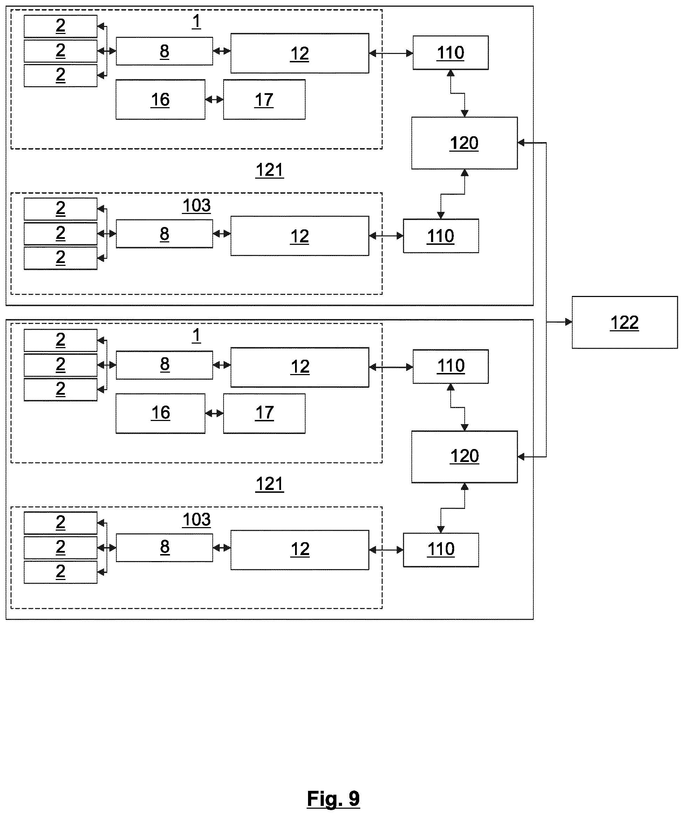

Figur 9 zeigt eine beispielhafte Ausführungsform eines Hängeförderersystems 100. Das Hängeförderersystem 100 kann über mehrere Standorte 121 verteilt sein. Beispielsweise kann ein Hängeförderer 101 an einem ersten Standort 121 aufgestellt sein, und ein weiterer Hängeförderer 101 kann an einem weiteren Standort 121 aufgestellt sein. Jeder der Hängeförderer 101 kann jeweils einen oder mehrere Überwachungscarrier 1 und/oder jeweils mindestens eine Überwachungsstation 103, beispielsweise Carrierprüfstationen 103, aufweisen. An einem, mehreren oder allen Standorten 121 kann eine jeweilige lokale Kontrollstation 120 aufgestellt und/oder vorgesehen sein, die wie vorstehend beschrieben mit den jeweiligen Überwachungscarriern 1 und/oder Überwachungsstationen 103 verbunden sein kann, und/oder Daten austauschen kann. Die jeweiligen lokalen Kontrollstationen 120 können die an den jeweiligen Standorten 121 aufgestellten Hängeförderer 101 steuern und/oder regeln, wie z.B. vorstehend beschrieben. Die lokalen Kontrollstationen 121 können dazu eingerichtet sein, charakteristische Werte 10 und/oder Daten von den jeweiligen Überwachungscarriern 1 und/oder Überwachungsstationen 103 empfangen, und/oder verarbeiten, auswerten, modifizieren oder dergleichen. Eine, mehrere oder alle lokale Kontrollstationen 121 können eines, mehrere oder alle Merkmale und/oder Vorteile einer vorstehend beschriebenen Kontrollstation 102 aufweisen.

Das Hängeförderersystem 100 kann eine zentrale Kontrollstation 122 aufweisen. Die zentrale Kontrollstation 122 kann mit den lokalen Kontrollstationen 120 zum Datenaustausch verbunden sein. Die zentrale Kontrollstation 122 kann an einem bestimmten Standort 121 aufgestellt und/oder vorgesehen sein. Alternativ kann die zentrale Kontrollstation 122 aber auch an einem von dem Standorten 121 der Hängeförderer 101 verschiedenem Ort aufgestellt und/oder vorgesehen sein. Die zentrale Kontrollstation 122 kann von den lokalen Kontrollstationen 121 Daten und/oder charakteristische Werte 10 empfangen, und/oder von den lokalen Kontrollstationen erstellte Prognosen, Auswertungen, Analysen oder dergleichen. Es kann vorgesehen sein, dass die zentrale Kontrollstation die von den lokalen Kontrollstationen 120 empfangenen Daten und/oder charakteristische Werte 10, erstellte Prognosen, Auswertungen, Analysen oder dergleichen auswertet, vergleicht, analysiert, modifiziert, abspeichert, und/oder Prognosen, Analysen, Auswertungen oder dergleichen erstellt. Es kann vorgesehen sein, dass die zentrale Kontrollstation 121 Steuerbefehle erstellt und/oder Steuerbefehle an die lokalen Kontrollstationen 120 übermittelt. Die zentrale Kontrollstation 122 kann eines, mehrere oder alle Merkmale und/oder Vorteile einer vorstehend beschriebenen Kontrollstation 102 aufweisen.

Es kann vorgesehen sein, dass die Kontrollstation 102, die lokale Kontrollstation 120 und/oder die zentrale Kontrollstation 122 Systemparameter und/oder Umgebungsparameterdaten wie z.B. Temperatur, Luftfeuchtigkeit, Luftdruck und dergleichen, bei der Vorhersage eines Ausfalls, einer Anomalie oder einer Wartung berücksichtigen kann. Die Kontrollstation 102, die lokale Kontrollstation 120 und/oder die zentrale Kontrollstation 122 kann basierend auf der Vorhersage Instandhaltungsmaßnahmen definieren, bestimmen oder ermitteln.

In einigen Ausführungsformen kann eine Kontrollstation 102, eine lokale Kontrollstation 120 und/oder die zentrale Kontrollstation 122 mehrere Hängeförderer 101 überwachen, von diesen Daten erhalten oder abfragen, und/oder steuern. Es kann vorgesehen sein, dass die Kontrollstation 102, die lokale Kontrollstation 120 und/oder die zentrale Kontrollstation 122 Daten, z.B. charakteristische Werte 10, von den mehreren Hängeförderern 101 erhalten oder abfragen kann. Die Daten der mehreren Hängeförderer 101 können bei der Vorhersage eines Ausfalls, einer Anomalie oder einer Wartung berücksichtigt sein oder werden, und/oder aggregiert sein oder werden. In einigen Ausführungsformen kann vorgesehen sein, generelle Anpassungen an allen Hängeförderern 101 oder aller Hängeförderer 101 basierend auf einer von der zentralen Kontrollstation 122 durchgeführten Auswertung, Analyse oder Vorhersage vorzunehmen. Erkenntnisse von Schwachstellen können zentral gesteuert werden, und die Schwachstellen können ausgetauscht und/oder Fehler behoben sein oder werden.

Es kann vorgesehen sein, dass basierend auf der von der Kontrollstation 102, der lokalen Kontrollstation 120 und/oder der zentralen Kontrollstation 122 durchgeführten Auswertung, Analyse oder Vorhersage Regeln und/oder Wartungspläne angepasst sind oder werden, und/oder neu aufgestellt sind oder werden. Die Regeln und/oder Wartungspläne können in einigen Ausführungsformen dynamisch über die Erkenntnisse des tatsächlichen Zustandes mittels "maschinellen Lernen" angepasst sein oder werden.

Es kann vorgesehen sein, dass bei der Anpassung oder Erstellung der Regeln oder Wartungspläne auch eines oder mehrere aus Daten aus der lokalen Steuerung, wie z.B. Betriebsstunden, Anzahl der Ein- und Ausschaltvorgänge, Stromaufnahme, ggf. erhöhte Stromaufnahme, Gewicht der Taschen, Umwelteinflüsse wie z.B. Temperatur, Luftfeuchtigkeit, Staub oder dergleichen, bisherige Wartungen, Auslastung des Systems, Geschwindigkeit des Systems, oder dergleichen, berücksichtigt sind oder werden.

Die Kontrollstation 102, die lokale Kontrollstation 120 und/oder die zentrale Kontrollstation 122 kann eine Planung von Wartungen, Alternativrouten, z.B. Alternativrouten der Carrier 1, Instandhaltungszeiten oder zu wartender bzw. instand zu haltender Abschnitte, eine Stilllegung einzelner Strecken ohne Systembeeinflussung (z.B. einzelne Pufferstrecken), oder dergleichen durchführen und/oder bestimmen.

In einigen Ausführungsformen kann vorgesehen sein, dass eine digitale Überwachungsansicht eine dreidimensionale Repräsentation des Materialtransportsystems bzw. Hängeförderers 101 und/oder des Hängeförderersystems 100 umfassen kann, mit der die Daten, charakteristische Werte 10, und dergleichen angezeigt werden können. Es kann vorgesehen sein, dass die Daten und/oder charakteristischen Werte 10 live in dem System anzeigt werden können. Damit können Probleme visuell dargestellt sein oder werden. In einigen Ausführungsformen kann die digitale Überwachungsansicht auf einem Bildschirm oder Monitor dargestellt sein oder werden. Alternativ oder zusätzlich kann die digitale Überwachungsansicht beispielsweise in einer App dargestellt sein, so dass sie auf einem mobilen Gerät, beispielsweise einem Smartphone oder dergleichen, darstellbar sein kann.

Durch die zentrale Kontrollstation 122 können Analysen oder Überwachungen des Betriebszustands einer oder mehrerer Hängeförderer 101 zentral erfolgen, d.h. nicht an dem Standort 121, an dem der jeweilige Hängeförderer 101 aufgestellt ist. Auch die Modellierung von Betriebszuständen, die Prognose von Wartungszeitpunkten, die Anpassung von Steuerbefehlen oder Steuerprogrammen der Hängeförderer 101 z.B. in Abhängigkeit des Betriebszustands, kann zentral erfolgen. Die Analysen, Überwachungen und/oder Modellierung von Betriebszuständen, die Prognose von Wartungszeitpunkten, und/oder die Anpassung von Steuerbefehlen oder Steuerprogrammen der Hängeförderer 101 z.B. in Abhängigkeit des Betriebszustands kann dann von der zentralen Kontrollstation 122 an die jeweilige lokale Kontrollstation 120 übermittelt sein oder werden.

Damit kann beispielsweise zentral durch die zentrale Kontrollstation 122 die Steuerung der Hängeförderer 101 basierend auf charakteristischen Werte 10, Daten, Messwerten, oder sonstigen Erfahrungen der jeweiligen individuellen Hängeförderer 101 verbessert werden, z.B. durch Aggregation und/oder Berücksichtigung der entsprechenden Daten und Werte aller Hängeförderer 101. Die entsprechenden Verbesserungen oder Anpassungen der Steuerung können dann "lokal" bzw. "vor Ort" aufgespielt und/oder für die jeweiligen individuellen Hängeförderer 100 eingesetzt sein oder werden, beispielsweise unter Übertragung an die jeweiligen lokalen Kontrollstationen 120.

Es kann vorgesehen sein, dass ein "maschinelles Lernen" oder ein anderer geeigneter Algorithmus durch die zentrale Kontrollstation 122 trainiert ist oder wird, z.B. basierend auf den von den lokalen Kontrollstationen 120 und/oder den jeweiligen Hängeförderern 101 übermittelten Daten und/oder charakteristischen Werte 10. Der trainierte Algorithmus kann dann von der zentralen Kontrollstation 122 and die lokalen Kontrollstationen 120 übermittelt sein oder werden, und "vor Ort", d.h. an den jeweiligen Standorten 121, eingesetzt sein oder werden.

Die in den Ansprüchen, der Beschreibung und den Figuren offenbarten Merkmale können einzeln oder in beliebiger Kombination für die Verwirklichung der Erfindung wesentlich sein.

### Bezugszeichenliste

- 1: Carrier
- 2: Überwachungseinheit
- 3: Laufrolle
- 4: Aufnahme
- 5: Koppelstück
- 6: Magnetkupplung
- 7: Tasche
- 8: Kontrolleinheit
- 9: Schnittstelle
- 10: charakteristischer Wert
- 11: Datenspeicher
- 12: Funkschnittstelle
- 13: Kompression

- 14: Funkverbindung
- 15: kabelgebundene Verbindung

- 16: Energiespeicher
- 17: Ladeeinheit

- 100: Hängeförderersystem
- 101: Hängeförderer
- 102: Kontrollstation
- 103: Überwachungsstation
- 104: Beladestation
- 105: Entladestation
- 106: Matrixsorter
- 107: Taschenpuffer
- 108: Weiche

- 109: Server
- 110: Gateway
- 111: Human-Machine-Interface
- 112: Benutzer
- 113: externes Gerät
- 114: Datenbank
- 115: Log-Nachricht
- 116: Computereinheit
- 117: Log-Server
- 118: Verbindung
- 119: Verbindung
- 120: lokale Kontrollstation
- 121: Standort
- 122: zentrale Kontrollstation
- 123: Funktionseinheit
- 124: Schwingung

- 202: Überwachungsabschnitt

- R: Überwachungsroute
- B: Bereich
- P: Überwachungspunkt

## Patentansprüche

1. Hängeförderersystem (100), aufweisend ein Überwachungssystem und einen Hängeförderer (101) mit mindestens einem Carrier (1), wobei der entlang einer Schiene des Hängeförderers (101) verfahrbar ist, wobei das Überwachungssystem eine Kontrollstation (102) und mindestens eine mit der Kontrollstation (102) zum Datenaustausch verbundene Überwachungseinheit (2) aufweist, die dazu eingerichtet ist, einen charakteristischen Wert (10) des Hängeförderers (101) und/oder des Carriers (1) zu erfassen und an die Kontrollstation (102) zu übermitteln, wobei bevorzugt mindestens eine der Überwachungseinheiten (2) an oder bei dem Hängeförderer (101) angeordnet ist, besonders bevorzugt an oder bei einer Funktionseinheit, Schiene, Weiche, Vereinzelungsvorrichtung oder einer Station des Hängeförderers (101).

2. Hängeförderersystem nach Anspruch 1, das einen Überwachungscarrier (1) aufweist, der entlang einer Schiene des Hängeförderers (101) verfahrbar ist und der mindestens eine Überwachungseinheit (2) aufweist.

3. Hängeförderersystem (100) nach Anspruch 1 oder 2, wobei das Hängeförderersystem (100) eine Überwachungsstation (103) aufweist, die an, in oder bei einem Schienenabschnitt des Hängeförderers (101) angeordnet ist und die mindestens eine oder die Überwachungseinheit (2) aufweist, wobei die Überwachungseinheit (2) dazu eingerichtet ist, einen für einen Carrier (1) des Hängeförderers (101) und/oder den Schienenabschnitt charakteristischen Wert (10) zu erfassen, wenn der Carrier (101) in dem Schienenabschnitt verfahren ist oder wird.

4. Hängeförderersystem (100) nach einem der vorangegangenen Ansprüche, wobei die Kontrollstation (102) dazu eingerichtet ist, eine Überwachungsroute (R) entlang des Hängeförderers (101) zu bestimmen und der Carrier (1) dazu eingerichtet ist, die Überwachungsroute (R) abzufahren, wobei die Überwachungsroute (R) zumindest abschnittsweise oder punktweise einen Überwachungsbereich (B) und/oder Überwachungspunkt (P) umfasst und die Überwachungseinheit (2) dazu eingerichtet ist, den charakteristischen Wert (10) an, bei oder in dem Überwachungsbereich (B) und/oder Überwachungspunkt (P) zu erfassen, wobei bevorzugt die Kontrollstation (102) dazu eingerichtet ist, den Carrier (1) und/oder den Hängeförderer (101) derart zu steuern, dass der Carrier (1) entlang des Überwachungsbereichs (B) verfahren ist oder wird.

5. Hängeförderersystem (100) nach Anspruch 4, wobei die Kontrollstation (102) dazu eingerichtet ist, die Überwachungsroute (R), den Überwachungsbereich (B) und/oder den Überwachungspunkt (P) wiederholt und/oder periodisch zu bestimmen und/oder zu ändern.

6. Hängeförderersystem (100) nach einem der vorangegangenen Ansprüche, wobei die Überwachungseinheit (2) dazu eingerichtet ist, den charakteristischen Wert (10) wiederholt und/oder periodisch zu erfassen

7. Hängeförderersystem (100) nach einem der vorangegangenen Ansprüche, wobei die Kontrollstation (102) dazu eingerichtet ist, basierend auf einem oder mehreren erfassten charakteristischen Werte (10) eine Analyse von Vibrationen oder Schwingungen, bevorzugt des Hängeförderers (101) oder einer Funktionseinheit des Hängeförderers (101) durchzuführen, wobei bevorzugt die Kontrollstation (102) dazu eingerichtet ist, die Analyse unter Berücksichtigung von einer oder der Überwachungseinheit (2) des Carriers (1) gemessenen Beschleunigungen durchzuführen.

8. Hängeförderersystem (100) nach einem der vorangegangenen Ansprüche, wobei die Kontrollstation (102) dazu eingerichtet ist, basierend auf dem erfassten charakteristischen Wert (10) einen Status des Hängeförderers (101) und/oder einer Funktionseinheit des Hängeförderers (101) zu bestimmen, und/oder eine Vorhersage eines Ausfalls, Anomalie, und/oder Wartung des Hängeförderers (101) oder eines Teils des Hängeförderers (101) durchzuführen.

9. Hängeförderersystem (100) nach einem der vorangegangenen Ansprüche, wobei das Überwachungssystem und/oder die Kontrollstation (102) einen Server (108) aufweist, der dazu eingerichtet ist, von der Überwachungseinheit (2) erfasste charakteristische Werte zu empfangen und/oder zu verarbeiten, wobei bevorzugt wobei die Kontrollstation (102) über narrowband-IOT, LTE, GSM, WLAN und/oder Bluetooth mit der Überwachungseinheit (2) verbunden ist, wobei bevorzugt der Server (108) ein Cloud-Server ist oder aufweist.

10. Hängefördersystem nach einem der vorangegangenen Ansprüche, wobei die Kontrollstation (102) und/oder der Server (108) mit einem externen Gerät (113) zum Datenaustausch verbunden ist, so dass das externe Gerät (113) auf der Kontrollstation (102) und/oder dem Server (108) hinterlegte Daten, bevorzugt charakteristische Werte, zugreifen kann, wobei bevorzugt wobei die Kontrollstation (102) dazu eingerichtet ist, Steuerbefehle von dem externen Gerät (113) zu empfangen, so dass eine Fernwartung des Hängefördersystems durch das externe Gerät (113) durchführbar ist.

11. Hängeförderersystem (100) nach einem der vorangegangenen Ansprüche, wobei das Überwachungssystem ein Gateway (110), bevorzugt ein IoT-Gateway, aufweist, das mit der Kontrollstation (102), bevorzugt dem Server (108), und der Überwachungseinheit (2) verbunden ist.

12. Hängeförderersystem (100) nach einem der vorangegangenen Ansprüche 9 bis 11, wobei das Überwachungssystem eine Benutzerschnittstelle, bevorzugt ein Human-Machine-Interface (111), besonders bevorzugt ein Display, aufweist, das mit dem Server (108) und/oder dem Gateway (110) verbunden ist und das dazu eingerichtet ist, charakteristische Werte (10) und/oder von der Kontrollstation (102) durchgeführte Statusbestimmungen, Analysen und/oder Prognosen auszugeben, bevorzugt anzuzeigen, wobei bevorzugt das Human-Machine-Interface (111) mit dem externen Gerät (113) zum Datenaustausch verbunden ist und dazu eingerichtet ist, von dem externen Gerät (113) empfangene Daten und/oder Steuerbefehle zu verarbeiten und/oder auszugeben, bevorzugt anzuzeigen.

13. Hängeförderersystem (100) nach einem der vorangegangenen Ansprüche, bei dem der Hängeförderer (101) eine Ausschleusstation aufweist, die dazu eingerichtet ist, einen auszuschleusenden Carrier (1) auszuschleusen, wobei die Kontrollstation (102) dazu eingerichtet ist, basierend auf erfassten charakteristischen Werten (10) zu bestimmen, ob ein Carrier (1) ein auszuschleusender Carrier (1) ist.

14. Verfahren zum Überwachen eines Hängeförderers (101), mit den folgenden Schritten:
a) Erfassen eines für einen Hängeförderer (101) und/oder einen Carrier (1) des Hängeförderers (101) charakteristischen Werts (10) mit einer Überwachungseinheit (2) und übermitteln des erfassten charakteristischen Werts (10) an eine Kontrollstation (102), wobei der charakteristische Wert von einer an einem Carrier (1) angeordneten Überwachungseinheit (2) erfasst wird und/oder wobei der charakteristische Wert oder ein weiterer charakteristischer Wert von einer an, bei oder in dem Hängeförderer (101) oder an, bei oder in einer Funktionseinheit des Hängeförderers (101) angeordneten Überwachungseinheit (2) erfasst wird;
b) Auswerten des übermittelten charakteristischen Werts (10) durch die Kontrollstation (102);
wobei bevorzugt der Datenaustausch, bevorzugt mindestens zwischen Kontrollstation (102) und mindestens einer Überwachungseinheit (2), über narrowband-IOT, LTE, WLAN, GSM und/oder Bluetooth erfolgt.

15. Verfahren nach Anspruch 14, wobei vor dem Erfassen des charakteristischen Werts (10) das Verfahren die Schritte umfasst:
- Bestimmen einer Überwachungsroute (R) mit einem Überwachungsbereich (B) und/oder einem Überwachungspunkt (P)
- Verfahren des Carriers (1) an einen Punkt an oder in dem Überwachungsbereich (B) und/oder Überwachungspunkt (P);
und wobei bei dem Erfassen des charakteristischen Werts (10) der charakteristische Wert an, in oder bei dem Überwachungsbereich (B) und/oder Überwachungspunkt (P) erfasst wird.

16. Verfahren nach einem der vorangegangenen Ansprüche 14 bis 15, wobei einer, mehrere oder alle Schritte des Verfahrens, insbesondere Schritt a), wiederholt werden, bevorzugt periodisch wiederholt werden.

17. Verfahren nach Anspruch 16, wobei bei mindestens einer Wiederholung eines, mehrerer oder aller Schritte des Verfahrens die Überwachungsroute (R), der Überwachungsbereich (B) und/oder der Überwachungspunkt (P) geändert wird.

18. Verfahren nach einem der vorangegangenen Ansprüche 14 bis 17, wobei bei dem Auswerten des oder der übermittelten charakteristischen Werte (10) ein Status des Hängeförderers (101) und/oder des Carriers (1) ermittelt wird; und/oder
wobei bei dem Auswerten des oder der übermittelten charakteristischen Werte (10) eine Vorhersage eines Ausfalls, einer Anomalie und/oder einer Wartung durchgeführt wird;
wobei bei dem Auswerten überprüft wird, ob Transportgut aus dem Hängeförderer (101) herausgefallen ist, wobei bevorzugt die charakteristischen Werte (10) Bilder, Videos und/oder Tiefendaten umfassen.

19. Verfahren nach einem der vorangegangenen Ansprüche 14 bis 18, wobei eine Schwingung (124), bevorzugt eine Vibration oder eine akustische Schwingung, erfasst wird und bei dem Auswerten des oder der übermittelten charakteristischen Werte (10) eine Analyse der Schwingungen (124) durchgeführt wird, wobei die charakteristischen Werte (10) bevorzugt Beschleunigungswerte und/oder Geräusche umfassen.

20. Verfahren nach Anspruch 19, bei dem mehrmals eine Schwingung erfasst wird, wobei eine erste Schwingung an einem ersten Überwachungspunkt und eine zweite Schwingung an einen zweiten, von dem ersten Überwachungspunkt verschiedenen Überwachungspunkt erfasst ist oder wird; und/oder
der Betriebszustand einer Funktionseinheit (123) des Hängeförderers (101) bei oder vor dem Erfassen der Schwingung (124) variiert wird; und/oder
bei dem Verfahren des Carriers (1) entlang der Überwachungsroute (R) und/oder im Überwachungsbereich (B) und/oder beim Erfassen der Schwingung (124) zumindest abschnittsweise und/oder zeitweise eine Geschwindigkeit und/oder Beschleunigung des Carriers 1 variiert wird; und/oder
bei dem Verfahren des Carriers (1) und/oder Erfassen der Schwingung (124) der Carrier (1) mehrmals und/oder wiederholt entlang der Überwachungsroute (R) und/oder im Überwachungsbereich (B) verfahren wird; und/oder
zum Erfassen der Schwingung (124) mindestens zwei Carrier (1) mit unterschiedlicher Beladung entlang der Überwachungsroute (R) und/oder im Überwachungsbereich (B) verfahren werden.

21. Verfahren nach einem der der vorangegangenen Ansprüche 14 bis 20, wobei bei dem Auswerten der übermittelten charakteristischen Werte bestimmt wird, ob ein Carrier (1) ein auszuschleusender Carrier (1) ist, und wenn ein Carrier (1) ein auszuschleusender Carrier (1) ist, der auszuschleusende Carrier (1) mit einer Ausschleusstation des Hängeförderers (101) ausgeschleust wird.

22. Verfahren nach einem der vorangegangenen Ansprüche 14 bis 121, wobei ein Steuerbefehl von einem oder dem mit der Kontrollstation (102) zum Datenaustausch verbundenen externen Gerät (113), und/oder einem oder dem mit der Kontrollstation (102) zum Datenaustausch verbundenen Human-Machine-Interface (111), an die Kontrollstation (102) übermittelt wird, und die Kontrollstation (102) basierend auf dem Steuerbefehl den Carrier (1) und/oder den Hängeförderer (101) ansteuert.

## Geänderte Patentansprüche

### Geänderte Patentansprüche gemäss Regel 137(2) EPÜ.

1. Hängeförderersystem (100), aufweisend ein Überwachungssystem und einen Hängeförderer (101) mit mindestens einem Carrier (1), wobei der entlang einer Schiene des Hängeförderers (101) verfahrbar ist, wobei das Überwachungssystem eine Kontrollstation (102) und mindestens eine mit der Kontrollstation (102) zum Datenaustausch verbundene Überwachungseinheit (2) aufweist, die dazu eingerichtet ist, einen charakteristischen Wert (10) des Hängeförderers (101) und/oder des Carriers (1) zu erfassen und an die Kontrollstation (102) zu übermitteln, wobei bevorzugt mindestens eine der Überwachungseinheiten (2) an oder bei dem Hängeförderer (101) angeordnet ist, besonders bevorzugt an oder bei einer Funktionseinheit, Schiene, Weiche, Vereinzelungsvorrichtung oder einer Station des Hängeförderers (101), **dadurch gekennzeichnet, dass** die Kontrollstation (102) dazu eingerichtet ist, eine Überwachungsroute (R) entlang des Hängeförderers (101) zu bestimmen und der Carrier (1) dazu eingerichtet ist, die Überwachungsroute (R) abzufahren, wobei die Überwachungsroute (R) zumindest abschnittsweise oder punktweise einen Überwachungsbereich (B) und/oder Überwachungspunkt (P) umfasst und die Überwachungseinheit (2) dazu eingerichtet ist, den charakteristischen Wert (10) an, bei oder in dem Überwachungsbereich (B) und/oder Überwachungspunkt (P) zu erfassen, und wobei die Kontrollstation (102) dazu eingerichtet ist, die Überwachungsroute (R), den Überwachungsbereich (B) und/oder den Überwachungspunkt (P) wiederholt und/oder periodisch zu bestimmen und/oder zu ändern.

2. Hängeförderersystem nach Anspruch 1, das einen Überwachungscarrier (1) aufweist, der entlang einer Schiene des Hängeförderers (101) verfahrbar ist und der mindestens eine Überwachungseinheit (2) aufweist.

3. Hängeförderersystem (100) nach Anspruch 1 oder 2, wobei das Hängeförderersystem (100) eine Überwachungsstation (103) aufweist, die an, in oder bei einem Schienenabschnitt des Hängeförderers (101) angeordnet ist und die mindestens eine oder die Überwachungseinheit (2) aufweist, wobei die Überwachungseinheit (2) dazu eingerichtet ist, einen für einen Carrier (1) des Hängeförderers (101) und/oder den Schienenabschnitt charakteristischen Wert (10) zu erfassen, wenn der Carrier (101) in dem Schienenabschnitt verfahren ist oder wird.

4. Hängeförderersystem (100) nach einem der vorangegangenen Ansprüche, wobei die Kontrollstation (102) dazu eingerichtet ist, den Carrier (1) und/oder den Hängeförderer (101) derart zu steuern, dass der Carrier (1) entlang des Überwachungsbereichs (B) verfahren ist oder wird.

5. Hängeförderersystem (100) nach einem der vorangegangenen Ansprüche, wobei die Überwachungseinheit (2) dazu eingerichtet ist, den charakteristischen Wert (10) wiederholt und/oder periodisch zu erfassen

6. Hängeförderersystem (100) nach einem der vorangegangenen Ansprüche, wobei die Kontrollstation (102) dazu eingerichtet ist, basierend auf einem oder mehreren erfassten charakteristischen Werte (10) eine Analyse von Vibrationen oder Schwingungen, bevorzugt des Hängeförderers (101) oder einer Funktionseinheit des Hängeförderers (101) durchzuführen, wobei bevorzugt die Kontrollstation (102) dazu eingerichtet ist, die Analyse unter Berücksichtigung von einer oder der Überwachungseinheit (2) des Carriers (1) gemessenen Beschleunigungen durchzuführen.

7. Hängeförderersystem (100) nach einem der vorangegangenen Ansprüche, wobei die Kontrollstation (102) dazu eingerichtet ist, basierend auf dem erfassten charakteristischen Wert (10) einen Status des Hängeförderers (101) und/oder einer Funktionseinheit des Hängeförderers (101) zu bestimmen, und/oder eine Vorhersage eines Ausfalls, Anomalie, und/oder Wartung des Hängeförderers (101) oder eines Teils des Hängeförderers (101) durchzuführen.

8. Hängeförderersystem (100) nach einem der vorangegangenen Ansprüche, wobei das Überwachungssystem und/oder die Kontrollstation (102) einen Server (108) aufweist, der dazu eingerichtet ist, von der Überwachungseinheit (2) erfasste charakteristische Werte zu empfangen und/oder zu verarbeiten, wobei bevorzugt wobei die Kontrollstation (102) über narrowband-IOT, LTE, GSM, WLAN und/oder Bluetooth mit der Überwachungseinheit (2) verbunden ist, wobei bevorzugt der Server (108) ein Cloud-Server ist oder aufweist.

9. Hängefördersystem nach einem der vorangegangenen Ansprüche, wobei die Kontrollstation (102) und/oder der Server (108) mit einem externen Gerät (113) zum Datenaustausch verbunden ist, so dass das externe Gerät (113) auf der Kontrollstation (102) und/oder dem Server (108) hinterlegte Daten, bevorzugt charakteristische Werte, zugreifen kann, wobei bevorzugt wobei die Kontrollstation (102) dazu eingerichtet ist, Steuerbefehle von dem externen Gerät (113) zu empfangen, so dass eine Fernwartung des Hängefördersystems durch das externe Gerät (113) durchführbar ist.

10. Hängeförderersystem (100) nach einem der vorangegangenen Ansprüche, wobei das Überwachungssystem ein Gateway (110), bevorzugt ein IoT-Gateway, aufweist, das mit der Kontrollstation (102), bevorzugt dem Server (108), und der Überwachungseinheit (2) verbunden ist.

11. Hängeförderersystem (100) nach einem der vorangegangenen Ansprüche 8 bis 10, wobei das Überwachungssystem eine Benutzerschnittstelle, bevorzugt ein Human-Machine-Interface (111), besonders bevorzugt ein Display, aufweist, das mit dem Server (108) und/oder dem Gateway (110) verbunden ist und das dazu eingerichtet ist, charakteristische Werte (10) und/oder von der Kontrollstation (102) durchgeführte Statusbestimmungen, Analysen und/oder Prognosen auszugeben, bevorzugt anzuzeigen, wobei bevorzugt das Human-Machine-Interface (111) mit dem externen Gerät (113) zum Datenaustausch verbunden ist und dazu eingerichtet ist, von dem externen Gerät (113) empfangene Daten und/oder Steuerbefehle zu verarbeiten und/oder auszugeben, bevorzugt anzuzeigen.

12. Hängeförderersystem (100) nach einem der vorangegangenen Ansprüche, bei dem der Hängeförderer (101) eine Ausschleusstation aufweist, die dazu eingerichtet ist, einen auszuschleusenden Carrier (1) auszuschleusen, wobei die Kontrollstation (102) dazu eingerichtet ist, basierend auf erfassten charakteristischen Werten (10) zu bestimmen, ob ein Carrier (1) ein auszuschleusender Carrier (1) ist.

13. Verfahren zum Überwachen eines Hängeförderers (101), mit den folgenden Schritten:
a) Erfassen eines für einen Hängeförderer (101) und/oder einen Carrier (1) des Hängeförderers (101) charakteristischen Werts (10) mit einer Überwachungseinheit (2) und übermitteln des erfassten charakteristischen Werts (10) an eine Kontrollstation (102), wobei der charakteristische Wert von einer an einem Carrier (1) angeordneten Überwachungseinheit (2) erfasst wird und/oder wobei der charakteristische Wert oder ein weiterer charakteristischer Wert von einer an, bei oder in dem Hängeförderer (101) oder an, bei oder in einer Funktionseinheit des Hängeförderers (101) angeordneten Überwachungseinheit (2) erfasst wird;
b) Auswerten des übermittelten charakteristischen Werts (10) durch die Kontrollstation (102);
wobei bevorzugt der Datenaustausch, bevorzugt mindestens zwischen Kontrollstation (102) und mindestens einer Überwachungseinheit (2), über narrowband-IOT, LTE, WLAN, GSM und/oder Bluetooth erfolgt,
**dadurch gekennzeichnet, dass** vor dem Erfassen des charakteristischen Werts (10) das Verfahren die Schritte umfasst:
- Bestimmen einer Überwachungsroute (R) mit einem Überwachungsbereich (B) und/oder einem Überwachungspunkt (P)
- Verfahren des Carriers (1) an einen Punkt an oder in dem Überwachungsbereich (B) und/oder Überwachungspunkt (P);
und wobei bei dem Erfassen des charakteristischen Werts (10) der charakteristische Wert an, in oder bei dem Überwachungsbereich (B) und/oder Überwachungspunkt (P) erfasst wird,
wobei einer, mehrere oder alle Schritte des Verfahrens, insbesondere Schritt a), wiederholt werden, bevorzugt periodisch wiederholt werden, und
wobei bei mindestens einer Wiederholung eines, mehrerer oder aller Schritte des Verfahrens die Überwachungsroute (R), der Überwachungsbereich (B) und/oder der Überwachungspunkt (P) geändert wird.

14. Verfahren nach Anspruch 13, wobei bei dem Auswerten des oder der übermittelten charakteristischen Werte (10) ein Status des Hängeförderers (101) und/oder des Carriers (1) ermittelt wird; und/oder
wobei bei dem Auswerten des oder der übermittelten charakteristischen Werte (10) eine Vorhersage eines Ausfalls, einer Anomalie und/oder einer Wartung durchgeführt wird;
wobei bei dem Auswerten überprüft wird, ob Transportgut aus dem Hängeförderer (101) herausgefallen ist, wobei bevorzugt die charakteristischen Werte (10) Bilder, Videos und/oder Tiefendaten umfassen.

15. Verfahren nach Anspruch 13 oder 14, wobei eine Schwingung (124), bevorzugt eine Vibration oder eine akustische Schwingung, erfasst wird und bei dem Auswerten des oder der übermittelten charakteristischen Werte (10) eine Analyse der Schwingungen (124) durchgeführt wird, wobei die charakteristischen Werte (10) bevorzugt Beschleunigungswerte und/oder Geräusche umfassen.

16. Verfahren nach Anspruch 15, bei dem mehrmals eine Schwingung erfasst wird, wobei eine erste Schwingung an einem ersten Überwachungspunkt und eine zweite Schwingung an einen zweiten, von dem ersten Überwachungspunkt verschiedenen Überwachungspunkt erfasst ist oder wird; und/oder
der Betriebszustand einer Funktionseinheit (123) des Hängeförderers (101) bei oder vor dem Erfassen der Schwingung (124) variiert wird; und/oder
bei dem Verfahren des Carriers (1) entlang der Überwachungsroute (R) und/oder im Überwachungsbereich (B) und/oder beim Erfassen der Schwingung (124) zumindest abschnittsweise und/oder zeitweise eine Geschwindigkeit und/oder Beschleunigung des Carriers 1 variiert wird; und/oder
bei dem Verfahren des Carriers (1) und/oder Erfassen der Schwingung (124) der Carrier (1) mehrmals und/oder wiederholt entlang der Überwachungsroute (R) und/oder im Überwachungsbereich (B) verfahren wird; und/oder
zum Erfassen der Schwingung (124) mindestens zwei Carrier (1) mit unterschiedlicher Beladung entlang der Überwachungsroute (R) und/oder im Überwachungsbereich (B) verfahren werden.

17. Verfahren nach einem der der vorangegangenen Ansprüche 13 bis 16, wobei bei dem Auswerten der übermittelten charakteristischen Werte bestimmt wird, ob ein Carrier (1) ein auszuschleusender Carrier (1) ist, und wenn ein Carrier (1) ein auszuschleusender Carrier (1) ist, der auszuschleusende Carrier (1) mit einer Ausschleusstation des Hängeförderers (101) ausgeschleust wird.

18. Verfahren nach einem der vorangegangenen Ansprüche 13 bis 17, wobei ein Steuerbefehl von einem oder dem mit der Kontrollstation (102) zum Datenaustausch verbundenen externen Gerät (113), und/oder einem oder dem mit der Kontrollstation (102) zum Datenaustausch verbundenen Human-Machine-Interface (111), an die Kontrollstation (102) übermittelt wird, und die Kontrollstation (102) basierend auf dem Steuerbefehl den Carrier (1) und/oder den Hängeförderer (101) ansteuert.
